(19) Europäisches Patentamt / European Patent Office / Office européen des brevets

(11) **EP 4 179 553 B1**

(12) **FASCICULE DE BREVET EUROPEEN**

(45) Date de publication et mention
de la délivrance du brevet:
**03.07.2024 Bulletin 2024/27**

(21) Numéro de dépôt: **22729502.9**

(22) Date de dépôt: **13.05.2022**

(51) Classification Internationale des Brevets (IPC):
***H01F 7/06*** *(2006.01)*     ***H01F 7/20*** *(2006.01)*
***H05H 13/04*** *(2006.01)*     ***H05H 7/04*** *(2006.01)*

(52) Classification Coopérative des Brevets (CPC):
**H01F 7/064; H01F 7/202; H05H 7/04; H05H 13/04;**
H05H 2007/045; Y02E 30/10

(86) Numéro de dépôt international:
**PCT/EP2022/063074**

(87) Numéro de publication internationale:
**WO 2022/243200 (24.11.2022 Gazette 2022/47)**

(54) **ELECTRO-AIMANT MULTIPOLAIRE**

MEHRPOLIGER ELEKTROMAGNET

MULTIPOLE ELECTROMAGNET

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.05.2021 FR 2105166**

(43) Date de publication de la demande:
**17.05.2023 Bulletin 2023/20**

(73) Titulaire: **SYNCHROTRON SOLEIL
91190 St Aubin (FR)**

(72) Inventeurs:
• **ALEXANDRE, Patrick
78150 Le Chesnay Rocquencourt (FR)**
• **BEN EL FEKIH, Rachid
91300 Massy (FR)**

(74) Mandataire: **IPAZ
Bâtiment Platon
Parc Les Algorithmes
91190 Saint-Aubin (FR)**

(56) Documents cités:
**US-A- 5 117 194**

• SUN C. ET AL: "Optimizations of nonlinear kicker injection for synchrotron light sources", PHYSICAL REVIEW ACCELERATORS AND BEAMS , vol. 23, no. 1 3 janvier 2020 (2020-01-03), XP055874022, DOI: 10.1103/PhysRevAccelBeams.23.010702 Extrait de l'Internet: URL:https://journals.aps.org/prab/pdf/10.1 103/PhysRevAccelBeams.23.010702 [extrait le 2021-12-17]
• ALEXANDRE PATRICK ET AL: "Transparent top-up injection into a fourth-generation storage ring", NUCLEAR INSTRUMENTS & METHODS IN PHYSICS RESEARCH. SECTION A, ELSEVIER BV * NORTH-HOLLAND, NL, vol. 986, 13 octobre 2020 (2020-10-13), XP086369828, ISSN: 0168-9002, DOI: 10.1016/J.NIMA.2020.164739 [extrait le 2020-10-13]
• Atkinson T ET AL: "DEVELOPMENT OF A NON-LINEAR KICKER SYSTEM TO FACILITATE A NEW INJECTION SCHEME FOR THE BESSY II STORAGE RING", Proceedings of IPAC2011, San Sebastián, Spain, 10 septembre 2011 (2011-09-10), pages 3394-3396, XP055872632, Extrait de l'Internet: URL:https://accelconf.web.cern.ch/ipac2011 /papers/thpo024.pdf [extrait le 2021-12-14] cité dans la demande

EP 4 179 553 B1

## Description

## Domaine technique

La présente invention concerne un électro-aimant multipolaire. Elle concerne aussi un procédé mis en oeuvre avec un tel électro-aimant.

Un tel électro-aimant permet à un utilisateur de générer un champ magnétique. Le domaine de l'invention est plus particulièrement celui des accélérateurs de particules.

## Etat de la technique antérieure

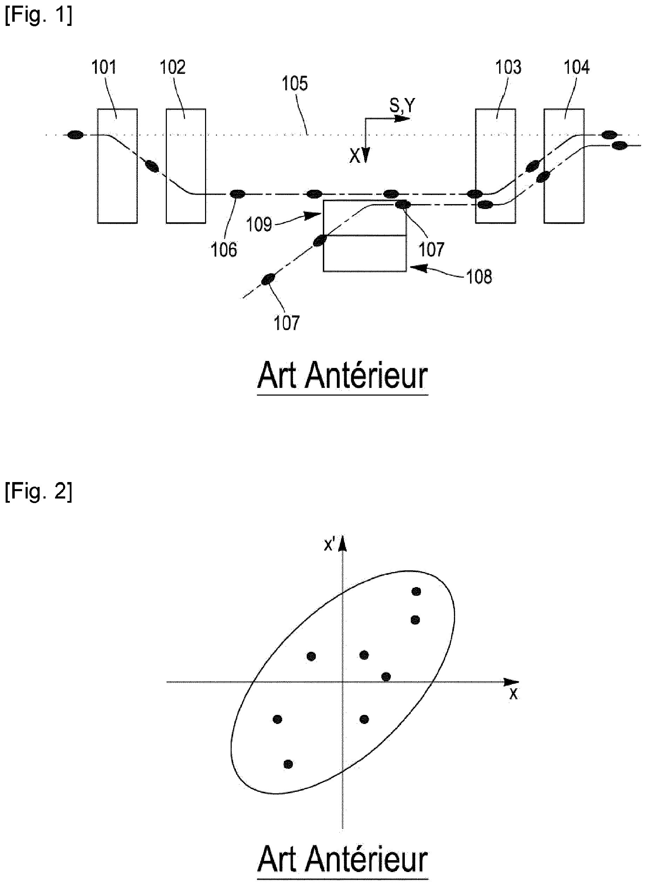

En référence à la figure 1, une source de rayonnement synchrotron est généralement composée d'un anneau de stockage (ANS) dans lequel circulent en continu des paquets 106 de particules chargées. Les particules utilisées dans la majorité des machines en fonctionnement dans le monde sont des électrons. Les énergies de travail de ces anneaux de stockage se situent généralement entre 1 et 8 GeV.

Un anneau de stockage est constitué a minima d'une succession périodique d'aimants de courbure (des aimants dipolaires) et d'aimants de focalisation (des aimants quadrupolaires). Des aimants d'ordre supérieur (aimants sextupolaires, octupolaires, etc...) sont également installés pour corriger des défauts de focalisation d'ordre supérieur (chromaticité par exemple). Cette succession d'aimants porte le nom de « maille ».

Lorsque les électrons sont déviés par les aimants de courbure, ils perdent une partie de leur énergie sous forme de rayonnement synchrotron, rayonnement caractérisé par une large gamme spectrale s'étendant typiquement de l'infrarouge jusqu'aux rayons X durs et par un flux de photons élevé. Ce rayonnement synchrotron est alors utilisé par les différents laboratoires (appelés des lignes de lumière) installés autour de l'anneau de stockage. On produit également du rayonnement synchrotron à partir d'autres types d'aimants nommés insertions magnétiques, généralement constituées d'une grande succession de petits aimants dipolaires.

Les paquets d'électrons stockés dans l'anneau de stockage n'ont pas une durée de vie infinie. Ils sont perdus petit à petit à cause de deux phénomènes principaux : interactions entre électrons (effet Touschek dont l'explication est donnée dans ce qui suit) et chocs avec des molécules de gaz résiduelles (car les électrons circulent dans des chambres à ultravide). Pour assurer un flux de photons constant sur les stations expérimentales des lignes de lumière, il importe donc de conserver un courant d'électrons constant dans la machine.

Le processus de réinjection continue porte le nom d'injection ou réinjection « continue pour conserver un courant stocké pratiquement constant » (aussi appelé injection « Top-Up » dans la suite de ce document) et le schéma ci-après, traditionnel, de la figure 1 est mis en oeuvre dans la majorité des anneaux de stockage de 3ème génération. Le schéma de principe se base sur quatre aimants déflecteurs/déviateurs magnétiques rapides 101, 102, 103, 104 (aussi appelés aimants kickers 101, 102, 103, 104 dans la suite de ce document) et un aimant 108 à septum passif 109. Ces aimants kickers 101, 102, 103, 104 sont des électro-aimants dipolaires simples, généralement constitués d'une spire à un ou deux enroulements dans un circuit magnétique en ferrite et alimentée en courant électrique impulsionnel de forme demi-sinusoïdale ou trapézoïdale. L'alimentation en impulsions de courant permet la génération de champs magnétiques brefs et donc de dévier rapidement des électrons, sur quelques révolutions d'un anneau de stockage.

L'aimant 108 à septum passif est également un électro-aimant dipolaire et sa principale caractéristique est que sa distribution transverse de champ magnétique comporte deux zones : une première zone, où le champ magnétique est intense pour permettre la déviation finale des faisceaux injectés 107 (c'est-à-dire l'entrefer (aussi appelé gap) de l'aimant), et une zone très proche où le champ magnétique est quasi-nul, afin de ne pas perturber le faisceau stocké 106. La séparation entre les deux zones de champ magnétique est réalisée avec une lame physique : le septum 109.

La trajectoire normale du faisceau stocké est donnée selon la ligne pointillée 105. Lors d'une injection, les quatre kickers 101, 102, 103, 104 sont alimentés en courant impulsionnel, générant ainsi une déviation d'orbite fermée : il s'agit de l'orbite représentée en trait-pointillé 106, avec les paquets déjà stockés. La déviation vient faire « lécher » les paquets stockés sur le bord intérieur du septum 109.

Au maximum de cette déviation d'orbite fermée, les électrons à injecter arrivent soit d'un anneau synchrotron élévateur d'énergie (ASEE) aussi appelé anneau accélérateur ou booster, soit d'un accélérateur linéaire, (trajectoire en trait-pointillé des paquets 107) et subissent une ultime déviation dans le gap de l'aimant à septum passif 108. En sortie de l'aimant 108 à septum passif, les paquets injectés 107 sont donc séparés des paquets stockés 106 par l'épaisseur du septum 109 (sans compter les marges techniques).

Les deux derniers kickers (103 & 104) ramènent évidemment les faisceaux 106, 107 vers l'axe normal de la machine. Le faisceau injecté 107, qui est légèrement désaxé commence une oscillation bêtatron à relativement grande amplitude autour du faisceau stocké 106. Le faisceau injecté 107 s'amortira alors tour après tour dans le faisceau stocké 106. On parvient ainsi à accumuler du courant dans un anneau de stockage.

Pour comprendre certains inconvénients sur l'injection « Top-up » selon l'état de l'art, il faut définir quelques paramètres sur les faisceaux d'électrons. Le mouvement de chaque électron se caractérise par 6 grandeurs :

[Math 1]

$$(x \; ; \; x' \; ; \; z \; ; \; z' \; ; \; s \; ; \; \delta)$$

Les grandeurs x, z et s représentent les positions transverses d'un électron (x et z) et sa position longitudinale dans l'anneau de stockage (s). Les grandeurs x' et z' sont les divergences angulaires de l'électron par rapport à la trajectoire idéale (c'est-à-dire la projection du vecteur vitesse de l'électron sur les axes X et Z). La lettre « delta » est l'erreur en énergie de l'électron par rapport à l'énergie de travail (ou nominale) de l'anneau de stockage.

En utilisant ces paramètres et pour se donner des représentations du mouvement des électrons, on utilise fréquemment la notion d'espace des phases. On trace, par exemple comme illustré en Figure 2, en abscisse la position x et en ordonnée la divergence x', à une position z et s données du faisceau.

On note, dans la figure 2, positions et divergences de huit électrons représentés par des points. Par extension, lorsqu'on injecte un grand nombre de particules (un paquet d'électrons contient typiquement $10^{11}$ électrons), toutes les positions stables x et x' seront parcourues et on obtient donc le contour (ellipse de la figure 2) dont l'aire est appelée émittance (ici horizontale) du faisceau d'électrons.

On utilise fréquemment les espaces des phases pour représenter les mécanismes d'injection, tels qu'on les décrira après.

Une dernière grandeur importante dans l'étude de schémas d'injection « Top-Up » est l'ouverture dynamique. En première approximation, l'ouverture dynamique correspond à l'ensemble des positions transverses stables dans l'anneau de stockage sur lesquelles un faisceau injecté 107 peut être placé. Un faisceau de particules injecté dans ces positions commencera une oscillation bêtatron et s'amortira ensuite tour après tour dans la position d'un faisceau stocké.

Le faisceau stocké 106 est logiquement au centre de l'ouverture dynamique.

La déviation d'orbite par les quatre kickers 101-104 fait décaler l'ouverture dynamique vers le septum 109.

Le faisceau injecté 107 se retrouve dans l'ouverture dynamique dans une zone stable.

Le faisceau stocké 106 se retrouve bien sur son axe centré, avec le faisceau injecté 107 oscillant autour du faisceau stocké 106. En l'absence de déviation d'orbite fermée par les quatre kickers 101-104, le bord intérieur du septum 109 est suffisamment loin du faisceau stocké 106 (typiquement une vingtaine de millimètres) : cette position n'affecte pas le faisceau stocké 106, à cause des pertes d'électrons par effet Touschek : il s'agit des échanges d'énergie aléatoires entre les électrons au sein d'un même paquet. Ceux qui ont un trop grand défaut ou excès d'énergie vont alors osciller à plus ou moins grande amplitude le long de l'anneau de stockage. Si les parois des chambres à vide (et donc du septum qui est une barrière physique) sont trop rapprochées des paquets d'électrons, elles risquent d'intercepter ces particules « Touschek » et donc il faudra réinjecter des électrons plus fréquemment. La durée de vie Touschek est un des paramètres fondamentaux de la conception des anneaux de stockage.

La déviation d'orbite par les quatre kickers 101-104 est rendue nécessaire par le fait qu'on ne peut pas laisser une limitation physique (le septum 109) proche du faisceau stocké 106 en permanence : la durée de vie du faisceau serait fortement réduite, comme expliqué précédemment.

En conclusion, pour injecter en Top-Up avec un schéma à quatre kickers 101-104 :

- le faisceau stocké 106 est décalé au plus proche du septum 109 en utilisant une déviation d'orbite générée par quatre aimants kickers 101-104,
- le faisceau injecté 107 est approché au plus proche du faisceau stocké 106 et rentre ainsi dans l'ouverture dynamique,
- à la réduction de la déviation d'orbite fermée, les deux faisceaux 106, 107 reviennent vers l'axe normal de l'anneau de stockage, loin du bord du septum 109.

Typiquement, la génération de la déviation d'orbite fermée par les quatre kickers 101-104 dure plusieurs tours d'anneau de stockage (soit plusieurs microsecondes ($\mu$s)) et sa réduction dure autant.

Par son mode de fonctionnement, ce schéma est dit « hors-axe » (car le faisceau injecté 107 n'est pas directement injecté sur l'axe du faisceau stocké 106) et « à l'énergie de travail de l'anneau de stockage (ou nominale) » (« on-momentum ») car le faisceau injecté 107 a la même énergie que le faisceau stocké 106.

Des inconvénients du schéma d'injection Top-Up de la figure 1 avec des aimants kickers 101-102 sont les suivants :

- une limite du schéma d'injection Top-Up avec 4 aimants kickers 101-104 est le défaut d'identité magnétique des aimants. Ce défaut implique que la déviation d'orbite du faisceau stocké 106 lors de l'injection n'est pas parfaitement fermée et par conséquent, l'ensemble du faisceau stocké 106 oscillera légèrement jusqu'à se stabiliser à nouveau après quelques milliers de révolutions,
- cette oscillation globale du faisceau stocké 106 à cause de l'injection Top-Up induit une oscillation du flux de photons sur les lignes de lumière, ce qui est pénalisant pour certaines expériences nécessitant un temps d'acquisition très court ou cherchant à analyser des échantillons nanométriques,
- malgré le soin apporté à la réalisation et au réglage des aimants kickers 101-104, les meilleures injections Top-Up parviennent difficilement à obtenir des oscillations résiduelles du faisceau stocké 106 inférieures à quelques dizaines ou centaines de micromètres efficaces (au sens RMS), l'ordre de grandeur des stabilités de faisceaux stockés étant le micromètre pour les machines actuelles, et inférieur au micromètre pour les machines futures.

Le schéma d'injection Top-Up avec quatre kickers 101-104 n'est plus forcément souhaitable dans les nouveaux anneaux de stockage (4ème génération) car les lignes de lumières souhaitent ne plus avoir de perturbation de leur flux de photons à cause de la réinjection, notamment à cause des nouvelles méthodes d'expérimentation et d'instrumentation qui nécessitent des temps d'acquisition très courts. La perturbation du faisceau stocké par la déviation d'orbite fermée par les quatre kickers 101-104 ne doit donc plus exister.

De plus, il est important d'avoir une relativement grande ouverture dynamique qui permette de contenir le faisceau stocké, l'épaisseur de la lame de septum et le faisceau injecté (ainsi que les marges techniques évidentes). Des aimants à septum passif avec des septa fins (1 millimètres ou moins) sont difficiles à concevoir car les contraintes en champ magnétique de fuite, c'est-à-dire le champ résiduel dans la zone où le faisceau stocké se situe, sont très sévères.

Or, les machines de 4ème génération utilisent de nombreux aimants d'ordre élevé à fort champ magnétique (sextupoles, octupoles, dodécapoles, etc...) ce qui a pour conséquence néfaste de réduire considérablement l'ouverture dynamique. Malgré les optimisations non-linéaires de ces nouvelles machines, les ouvertures dynamiques intéressantes (où le rendement d'injection dépasse 75%) ne dépassent guère 4 à 5 mm (au lieu d'ouvertures dynamiques entre 10 et 40 mm sur les machines actuelles).

Un schéma d'injection hors-axe proposé par Bessy II (article intitulé « DEVELOPMENT OF A NON-LINEAR KICKER SYSTEM TO FACILITATE A NEW INJECTION SCHEME FOR THE BESSY II STORAGE RING », T. Atkinson et al., Proceedings of IPAC2011, San Sebastián, Spain) utilise un aimant kicker multipolaire (ou en anglais « Multipole Injection Kicker » ou MIK). Dans la littérature, on trouve également le terme de kicker non linéaire (NLK en anglais).

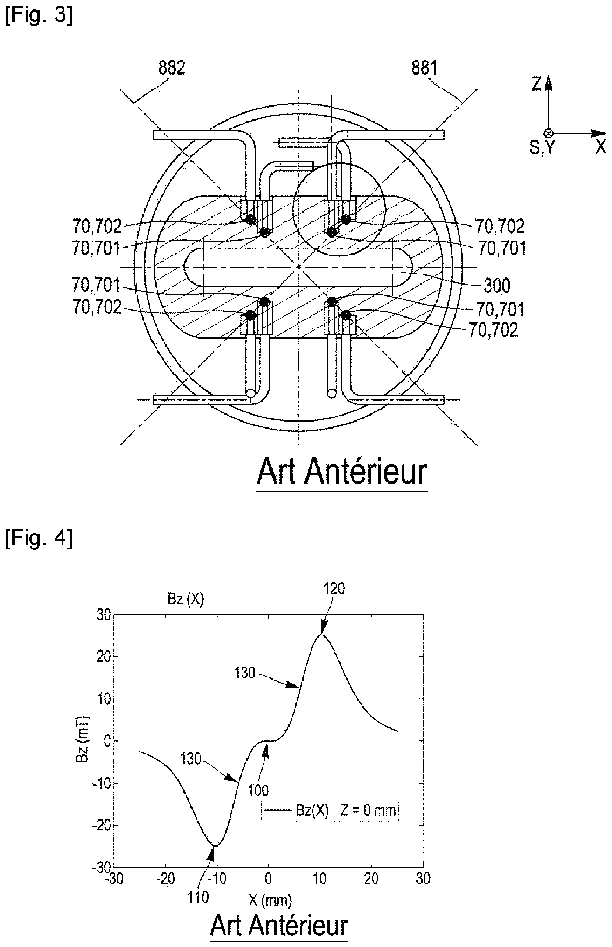

Le MIK proposé par Bessy II est constitué de 8 conducteurs cylindriques 70 placés parallèles à l'axe longitudinal d'un anneau de stockage. Un schéma de principe en est illustré en figure 3.

Chacun des conducteurs 70 est placé sur le sommet d'un parmi deux carrés dont le centre est placé sur le faisceau stocké. Ces conducteurs 70 sont alignés sur deux diagonales 881, 882 communes aux deux carrés et qui se croisent au centre de la chambre 300. Sur la figure 3, les conducteurs externes 70, 702 du plus grand des deux carrés sont parcourus par un courant allant dans un sens, les conducteurs internes 70, 701 du plus petit des deux carrés étant parcourus par le même courant mais dans le sens opposé. Les conducteurs sont encastrés dans la chambre à vide 300 en matière isolante. Les électrons circulent à l'intérieur au centre de cette chambre à vide 300.

L'aimant de la figure 3 génère a priori la carte de champ magnétique de la figure 4 pour un courant de 1 kiloampère (1 kA). On constate que cette composante magnétique verticale $B_z$ (selon l'axe vertical de la figure 3), qui permet de dévier des électrons dans le plan horizontal, possède en son centre un point 100 de champ magnétique nul, intéressant pour le faisceau stocké. En dehors de cette zone, on trouve du champ magnétique qui est susceptible de dévier dans l'ouverture dynamique des électrons hors-axe, typiquement ceux qui seraient injectés en Top-Up. On distingue des crêtes 110, 120 de champ magnétique où la variation du champ par rapport à l'axe X est faible (crêtes), et des zones 130 où ces variations sont élevées (gradients forts).

L'utilisation des MIK semble être idéale pour l'injection dans ces nouveaux anneaux de stockage avec une ouverture dynamique très réduite.

Cependant, ce type d'aimant MIK possède les limites ou inconvénients suivants.

La première difficulté provient des faisceaux injectés eux-mêmes : ceux-ci sont généralement générés à l'aide d'un booster, c'est-à-dire un accélérateur qui rampe les électrons d'une basse énergie vers l'énergie de travail de l'anneau de stockage. Les mailles des boosters sont en général assez classiques ce qui confère aux faisceaux à injecter une grande émittance horizontale. Typiquement, l'émittance du faisceau en sortie de booster est par exemple d'environ 140 nm.rad, à comparer aux 4.3 nm.rad du faisceau circulant dans l'anneau de stockage. Concrètement, cela signifie que leurs dimensions transverses ne sont pas négligeables (les paquets sont transversalement « larges »).

Si on superpose ces faisceaux injectés sur la carte de champ d'un MIK type Bessy II, on se rend compte que la zone la plus intéressante vis-à-vis du problème de dimensions du faisceau injecté est la crête de champ magnétique, située autour de +/- 10 mm. Les variations du champ magnétique par rapport à « X » sont les plus faibles et donc la majorité des électrons injectés recevraient une bonne déviation dans l'ouverture dynamique.

Malheureusement, dévier un faisceau injecté à 10 mm vers l'ouverture dynamique au niveau du MIK (c'est-à-dire une cordonnée $xi_{nj}$ en dessous de 5 mm) nécessiterait une force magnétique conséquente qu'un ou même plusieurs MIK ne sauraient générer raisonnablement. Les faisceaux en sortie de septum doivent donc arriver au MIK plus proche de l'axe normal et fatalement utiliser les zones de champ magnétique où le gradient est élevé. Il en résulte que la déviation sur un paquet d'électron à forte émittance ne serait pas uniforme et donc une grande partie de ces électrons ne serait pas correctement injectée et donc perdue.

De même, pour conserver une durée de vie par effet Touschek convenable, on ne peut pas rentrer davantage le septum vers l'intérieur de l'anneau de stockage.

Enfin, pour injecter proche de l'axe normal, il faut générer un champ magnétique suffisamment intense (typiquement quelques dizaines de milliteslas, à quelques millimètres de la zone de champ nul pour le faisceau stocké), et par conséquent il faut un courant pulsé de forte intensité typiquement de quelques milliers d'ampères.

Le but de la présente invention est de résoudre au moins un des inconvénients susmentionnés, et/ou de proposer un électro-aimant :

- limitant et/ou évitant une déviation d'orbite du faisceau stocké lors de l'injection, qui ne serait pas parfaitement fermée et/ou une oscillation du faisceau stocké trop longue avant de se stabiliser, et/ou
- limitant et/ou évitant une oscillation du flux de photons pénalisante pour certaines expériences nécessitant un temps d'acquisition très court ou cherchant à analyser des échantillons nanométriques, et/ou
- permettant d'obtenir des oscillations résiduelles du faisceau stocké inférieures à quelques dizaines ou centaines de micromètres efficaces,
- permettant de dévier plus efficacement un faisceau injecté, de préférence de grande émittance, vers une ouverture dynamique fonctionnelle et de préférence réduite avec une force magnétique raisonnable, et/ou
- améliorant l'uniformité de la déviation sur un paquet d'électron à forte émittance et/ou la qualité d'injection de ces électrons, et/ou
- permettant de conserver une ouverture mécanique de la chambre à vide d'aimant kicker compatible avec les contraintes de durée de vie Touschek, et/ou
- permettant un gain de place ou d'encombrement de l'électro-aimant, notamment par rapport à des solutions à plusieurs aimants kickers dipolaires.

**Exposé de l'invention**

Cet objectif est atteint avec un électro-aimant multipolaire que défini dans la revendication 1, l'électro-aimant multipolaire pour l'injection de particules, de préférence d'électrons ou positrons, comprenant :

- un conduit creux, agencé pour la conduite de particules à l'intérieur de son creux, ce creux s'étendant selon un axe longitudinal Y,
- une pluralité de conducteurs filaires placés parallèlement ou sensiblement parallèlement à l'axe longitudinal Y le long du conduit, (de préférence électriquement reliés en série) et agencés pour conduire du courant électrique.

Le sens du courant électrique parcourant les conducteurs filaires n'est pas identique pour tous les conducteurs filaires.

De préférence, l'électro-aimant peut comprendre autant de conducteurs filaires conduisant le courant électrique dans un premier sens que de conducteurs filaires conduisant le courant électrique dans un deuxième sens opposé au premier sens.

De préférence, les sens du courant électrique parcourant les conducteurs filaires peuvent être symétriques par rapport à un premier plan de symétrie parallèle ou sensiblement parallèle à l'axe longitudinal Y et passant par le creux.

Les conducteurs filaires sont répartis dans plusieurs plans porteurs parallèles ou sensiblement parallèles au premier plan de symétrie, dont deux plans porteurs principaux symétriques par rapport au premier plan de symétrie et situés à l'extérieur du creux. Chaque plan porteur principal porte des conducteurs filaires qui conduisent le courant électrique dans le premier sens et des conducteurs filaires qui conduisent le courant électrique dans le deuxième sens opposé au premier sens.

Chaque plan porteur principal peut porter au moins quatre conducteurs filaires, et porte de préférence 4, 5 ou 14 conducteurs filaires.

Les deux plans porteurs principaux peuvent être distants entre eux d'une distance supérieure ou égale à 7 mm.

Chaque plan porteur principal peut comprendre uniquement des conducteurs filaires se succédant les uns après les autres selon une alternance entre respectivement un ou deux conducteur(s) filaire(s) conduisant le courant électrique dans le premier sens puis respectivement un ou deux conducteur(s) filaire(s) conduisant le courant électrique dans le deuxième sens opposé au premier sens.

Les plans porteurs peuvent comprendre en outre deux plans porteurs de réglage, symétriques par rapport au premier plan de symétrie et situés à l'extérieur du creux de sorte que les plans porteurs principaux sont situés entre les plans porteurs de réglage.

L'électro-aimant selon l'invention peut comprendre des moyens pour déplacer les plans porteurs de réglage parallèlement et/ou perpendiculairement au premier plan de symétrie.

Chaque plan porteur de réglage peut porter au moins ou exactement 1, 2 ou 4 conducteurs filaires.

Chaque plan porteur de réglage peut comprendre des conducteurs filaires se succédant les uns après les autres selon une alternance entre respectivement un ou deux conducteur(s) filaire(s) conduisant le courant électrique dans le premier sens puis respectivement un ou deux conducteur(s) filaire(s) conduisant le courant électrique dans le deuxième sens opposé au premier sens.

Le ou les sens du courant électrique parcourant les conducteurs filaires aux extrémités de la succession de conducteurs filaires portés par les plans porteurs principaux peut ou peuvent être opposé(s) au sens du courant électrique parcourant les conducteurs filaires aux extrémités de la succession de conducteurs filaires portés par les plans porteurs de réglage.

Les sens du courant électrique parcourant les conducteurs filaires peuvent être symétriques par rapport à un deuxième plan de symétrie parallèle ou sensiblement parallèle à l'axe longitudinal Y et passant par le creux et perpendiculaire au premier plan de symétrie.

Le creux peut avoir :

-  selon une direction Z reliant les deux plans porteurs principaux, une dimension d'au moins 6 mm, et/ou
-  selon une direction X perpendiculaire à la direction Z et à l'axe longitudinal Y, une dimension d'au moins 6 mm ou même d'au moins 15 mm

Les conducteurs filaires et leur courant peuvent être agencés pour générer un champ magnétique dont la composante Bz(x) selon une direction Z reliant les deux plans porteurs principaux et variant en fonction de la coordonnée selon une direction X perpendiculaire à la direction Z et à l'axe longitudinal Y :

-  a une valeur nulle pour une position de champ nul située dans le creux du conduit, de préférence située sensiblement au centre d'une coupe transversale du creux du conduit, et de préférence a un champ inférieur 5 microteslas ($\mu$T) (de préférence 2 $\mu$T) de préférence sur un intervalle selon la direction X d'au moins 0,05 mm autour de la position de champ nul, de préférence pour une disposition des conducteurs aboutissant à une forme de champ nul de forme sextupolaire ou octupolaire (permettant d'assurer la transparence de l'injection vis-à-vis du faisceau stocké), et/ou
-  a une valeur d'au moins une crête, de préférence d'au moins deux crêtes de part et d'autre de la position de champ nul, d'au moins 10 milliteslas (mT), de préférence d'au moins 15 mT, pour une position à une distance A de la position de champ nul le long de la direction X et pour une crête de courant électrique de 1 kA dans les conducteurs filaires , cette crête de champ magnétique étant située dans le creux du conduit, et de préférence avec A supérieur ou égal à 3mm et/ou inférieur ou égal à 7mm (ou même inférieur ou égal à 5mm)

L'électro-aimant selon l'invention peut comprendre des moyens pour générer le courant électrique, de préférence impulsionnel (aussi appelé courant pulsé), parcourant les conducteurs filaires et typiquement supérieur à 500 Ampères et/ou inférieur à 10000 Ampères.

Le nombre de conducteurs filaires placés parallèlement ou sensiblement parallèlement à l'axe longitudinal Y le long du conduit et reliés en série peut être supérieur ou égal à 12.

Le nombre de conducteurs filaires placés parallèlement ou sensiblement parallèlement à l'axe longitudinal Y le long du conduit et reliés en série peut être inférieur ou égal à 32.

Le nombre de conducteurs filaires placés parallèlement ou sensiblement parallèlement à l'axe longitudinal Y le long du conduit et reliés en série peut être égal à 12, 16 ou 32.

A chacune des deux extrémités de l'électro-aimant le long de l'axe longitudinal Y, des conducteurs filaires voisins peuvent être reliés par paire par une liaison en série, cette liaison en série comprenant une boucle s'étendant dans un plan perpendiculaire au premier plan de symétrie, cette boucle fermée comprenant de préférence :

-  Une première partie de la boucle partant d'un premier conducteur filaire de la paire, perpendiculairement au premier plan de symétrie
-  Une troisième partie de la boucle rejoignant un deuxième conducteur filaire de la paire, perpendiculairement au premier plan de symétrie
-  Une deuxième partie de la boucle reliant la première partie de la boucle à la troisième partie de la boucle, parallèlement ou sensiblement parallèlement au premier plan de symétrie

   les deuxièmes parties de toutes ces boucles étant, pour une extrémité considérée des conducteurs filaires, de préférence parcourues par le courant électrique dans un même sens ;
en outre, de chacun des deux côtés du premier plan de symétrie, l'électro-aimant peut comprendre un conducteur auxiliaire reliant électriquement en série un conducteur filaire à un autre conducteur filaire ou à une borne d'alimentation électrique, d'une première extrémité de l'électro-aimant le long de la direction longitudinale Y à une deuxième extrémité de l'électro-aimant le long de la direction longitudinale, ce conducteur auxiliaire comprenant, à chacune des deux extrémités de l'électro-aimant le long de la direction Y, les parties suivantes reliées dans cet ordre en série :

-  Une première partie reliée électriquement à un conducteur filaire ou à une des deux bornes d'alimentation électrique
-  Une deuxième partie s'étendant parallèlement ou sensiblement parallèlement au premier plan de symétrie et agencée pour être parcourue par un courant électrique dans un sens opposé aux deuxièmes parties de boucles situées à la même extrémité de l'électro-aimant le long de la direction longitudinale Y, de sorte que ces deuxièmes parties de boucles soient situées entre le premier plan de symétrie et la deuxième partie du conducteur auxiliaire,
-  Optionnellement, une troisième partie s'étendant parallèlement ou sensiblement parallèlement au premier plan de symétrie et agencée pour être parcourue par un courant électrique dans un même sens que les deuxièmes parties de boucles situées à la même extrémité de l'électro-aimant le long de la direction longitudinale Y, de sorte que la deuxième partie du conducteur auxiliaire soit située entre le premier plan de symétrie et la troisième partie du conducteur auxiliaire,

- Une quatrième partie reliant les deux extrémités de l'électro-aimant le long de la direction longitudinale Y.

Suivant encore un autre aspect de l'invention, il est proposé un accélérateur de particules, de préférence d'électrons ou positrons, comprenant une source de rayonnement synchrotron, un anneau de stockage de particules chargées circulant dans cet anneau, et un électro-aimant selon l'invention.

Suivant encore un autre aspect de l'invention, un procédé mis en oeuvre dans un électro-aimant multipolaire pour l'injection de particules tel que défini dans la revendication 19 comprend :

- Une étape de conduite de particules, de préférence d'électrons ou positrons, à l'intérieur du creux d'un conduit creux, ce creux s'étendant selon un axe longitudinal Y,
- Une étape de conduite d'un courant électrique dans une pluralité de conducteurs filaires placés parallèlement ou sensiblement parallèlement à l'axe longitudinal Y le long du conduit, (et de préférence électriquement reliés en série).

Le sens du courant électrique parcourant les conducteurs filaires n'est pas identique pour tous les conducteurs filaires.

L'électro-aimant peut comprendre autant de conducteurs filaires conduisant le courant électrique dans un premier sens que de conducteurs filaires conduisant le courant électrique dans un deuxième sens opposé au premier sens.

Les sens du courant électrique parcourant les conducteurs filaires peuvent être symétriques par rapport à un premier plan de symétrie parallèle ou sensiblement parallèle à l'axe longitudinal Y et passant par le creux.

Les conducteurs filaires sont répartis dans plusieurs plans porteurs parallèles ou sensiblement parallèles au premier plan de symétrie, dont deux plans porteurs principaux symétriques par rapport au premier plan de symétrie et situés à l'extérieur du creux.

Chaque plan porteur principal porte des conducteurs filaires qui conduisent le courant électrique dans le premier sens et des conducteurs filaires qui conduisent le courant électrique dans le deuxième sens opposé au premier sens.

Chaque plan porteur principal peut porter au moins quatre conducteurs filaires, et porte de préférence 4, 5 ou 14 conducteurs filaires.

Les deux plans porteurs principaux peuvent être distants d'une distance entre eux supérieure ou égale à 7 mm.

Chaque plan porteur principal peut comprendre uniquement des conducteurs filaires se succédant les uns après les autres selon une alternance entre respectivement un ou deux conducteur(s) filaire(s) conduisant le courant électrique dans le premier sens puis respectivement un ou deux conducteur(s) filaire(s) conduisant le courant électrique dans le deuxième sens opposé au premier sens.

Les plans porteurs peuvent comprendre en outre deux plans porteurs de réglage, symétriques par rapport au premier plan de symétrie et situés à l'extérieur du creux de sorte que les plans porteurs principaux sont situés entre les plans porteurs de réglage.

Le procédé selon l'invention peut comprendre un déplacement, par des moyens de déplacement, des plans porteurs de réglage parallèlement et/ou perpendiculairement au premier plan de symétrie.

Chaque plan porteur de réglage peut porter au moins ou exactement 1, 2 ou 4 conducteurs filaires.

Chaque plan porteur de réglage peut comprendre des conducteurs filaires se succédant les uns après les autres selon une alternance entre respectivement un ou deux conducteur(s) filaire(s) conduisant le courant électrique dans le premier sens puis respectivement un ou deux conducteur(s) filaire(s) conduisant le courant électrique dans le deuxième sens opposé au premier sens.

Le ou les sens du courant électrique parcourant les conducteurs filaires aux extrémités de la succession de conducteurs filaires portés par les plans porteurs principaux peut ou peuvent être opposé(s) au sens du courant électrique parcourant les conducteurs filaires aux extrémités de la succession de conducteurs filaires portés par les plans porteurs de réglage.

Les sens du courant électrique parcourant les conducteurs filaires peuvent être symétriques par rapport à un deuxième plan de symétrie parallèle ou sensiblement parallèle à l'axe longitudinal Y et passant par le creux et perpendiculaire au premier plan de symétrie.

Le creux peut avoir :

- selon une direction Z reliant les deux plans porteurs principaux, une dimension d'au moins 6 mm, et/ou
- selon une direction X perpendiculaire à la direction Z et à l'axe longitudinal Y, une dimension d'au moins 6 mm ou même d'au moins 15 mm

Les conducteurs filaires et leur courant peuvent générer un champ magnétique dont la composante $Bz(x)$ selon une direction Z reliant les deux plans porteurs principaux et variant en fonction de la coordonnée selon une direction X perpendiculaire à la direction Z et à l'axe longitudinal Y :

- a une valeur nulle pour une position de champ nul

situés dans le creux du conduit, de préférence située sensiblement au centre d'une coupe transversale du creux du conduit, et de préférence a un champ inférieur 5 μT (de préférence 2 μT) de préférence sur un intervalle selon la direction X d'au moins 0,05 mm autour de la position de champ nul, de préférence pour une disposition des conducteurs aboutissant à une forme de champ nul de forme sextupolaire ou octupolaire (permettant d'assurer la transparence de l'injection vis-à-vis du faisceau stocké), et/ou

- a une valeur d'au moins une crête, de préférence d'au moins deux crêtes de part et d'autre de la position de champ nul, d'au moins 10 mT, de préférence d'au moins 15 mT, pour une position à une distance A de la position de champ nul le long de la direction X et pour une crête de courant électrique de 1 kA dans les conducteurs filaires, cette crête de champ magnétique étant située dans le creux du conduit, et de préférence avec A supérieur ou égal à 3mm et/ou inférieur ou égal à 7mm (ou même inférieur ou égal à 5mm)

Le procédé selon l'invention peut comprendre une génération du courant électrique, de préférence pulsé, parcourant les conducteurs filaires et typiquement supérieur à 500 Ampères et/ou inférieur à 10000 Ampères.

Le nombre de conducteurs filaires placés parallèlement ou sensiblement parallèlement à l'axe longitudinal Y le long du conduit et reliés en série peut être supérieur ou égal à 12.

Le nombre de conducteurs filaires placés parallèlement ou sensiblement parallèlement à l'axe longitudinal Y le long du conduit et reliés en série peut être inférieur ou égal à 32.

Le nombre de conducteurs filaires placés parallèlement ou sensiblement parallèlement à l'axe longitudinal Y le long du conduit et reliés en série peut être égal à 12, 16 ou 32.

A chacune des deux extrémités de l'électroaimant le long de l'axe longitudinal Y, des conducteurs filaires voisins peuvent être reliés par paire par une liaison en série, cette liaison en série comprenant une boucle s'étendant dans un plan perpendiculaire au premier plan de symétrie, cette boucle fermée comprenant de préférence :

- Une première partie de la boucle partant d'un premier conducteur filaire de la paire, perpendiculairement au premier plan de symétrie
- Une troisième partie de la boucle rejoignant un deuxième conducteur filaire de la paire, perpendiculairement au premier plan de symétrie
- Une deuxième partie de la boucle reliant la première partie de la boucle à la troisième partie de la boucle, parallèlement ou sensiblement parallèlement au premier plan de symétrie

les deuxièmes parties de toutes ces boucles étant, pour une extrémité considérée des conducteurs filaires, de préférence parcourues par le courant électrique dans un même sens ;

en outre, de chacun des deux côtés du premier plan de symétrie, l'électro-aimant peut comprendre un conducteur auxiliaire reliant électriquement en série un conducteur filaire à un autre conducteur filaire ou à une borne d'alimentation électrique, d'une première extrémité de l'électro-aimant le long de la direction longitudinale Y à une deuxième extrémité de l'électro-aimant le long de la direction longitudinale, ce conducteur auxiliaire comprenant, à chacune des deux extrémités de l'électro-aimant le long de la direction Y, les parties suivantes reliées dans cet ordre en série :

- Une première partie reliée électriquement à un conducteur filaire ou à une des deux bornes d'alimentation électrique
- Une deuxième partie s'étendant parallèlement ou sensiblement parallèlement au premier plan de symétrie et agencée pour être parcourue par un courant électrique dans un sens opposé aux deuxièmes parties de boucles situées à la même extrémité de l'électro-aimant le long de la direction longitudinale Y, de sorte que ces deuxièmes parties de boucles soient situées entre le premier plan de symétrie et la deuxième partie du conducteur auxiliaire,
- Optionnellement, une troisième partie s'étendant parallèlement ou sensiblement parallèlement au premier plan de symétrie et agencée pour être parcourue par un courant électrique dans un même sens que les deuxièmes parties de boucles situées à la même extrémité de l'électro-aimant le long de la direction longitudinale Y, de sorte que la deuxième partie du conducteur auxiliaire soit située entre le premier plan de symétrie et la troisième partie du conducteur auxiliaire,
- Une quatrième partie reliant les deux extrémités de l'électro-aimant le long de la direction longitudinale Y.

**Description des figures et modes de réalisation**

D'autres avantages et particularités de l'invention apparaîtront à la lecture de la description détaillée de mises en oeuvre et de modes de réalisation nullement limitatifs, et des dessins annexés suivants :

[Fig. 1] la figure 1 est une vue schématique du dessus d'une section d'injection selon l'état de l'art,
[Fig. 2] la figure 2 illustre un exemple d'espace des phases x & x' selon l'état de l'art,
[Fig. 3] la figure 3 illustre une coupe transverse d'un aimant MIK type MAX IV selon l'état de l'art,

**[Fig. 4]** la figure 4 illustre le champ magnétique Bz créé par l'aimant de la figure 3 selon l'état de l'art, pour un courant crête de 1kA.

**[Fig. 5]** la figure 5 est une vue de dessus d'une partie d'un accélérateur de particule comprenant un électro-aimant 1 selon l'invention,

**[Fig. 6]** la figure 6 est un exemple d'espace des phases x & x' d'un électro-aimant 1 selon l'invention,

**[Fig. 7]** la figure 7 est une vue de coupe, perpendiculairement à l'axe longitudinal Y, d'un premier mode de réalisation d'électro-aimant 1 selon l'invention, qui est le mode de réalisation préféré de l'invention,

**[Fig. 8]** la figure 8 est une vue en perspective du premier mode de réalisation d'électro-aimant 1 selon l'invention,

**[Fig. 9]** la figure 9 est la carte de champ magnétique Bz(X) pour Z=0 et Y=0 générée sous 1 kA du premier mode de réalisation de la figure 7,

**[Fig. 10]** la figure 10 illustre, pour le premier mode de réalisation d'électro-aimant 1 selon l'invention : sur sa partie a), la superposition des champs Bz(X) (idéal 17, avant 18 puis après 19 correction) zoomée au centre de la chambre 3 (Z=0, Y=0) ; sur sa partie b), la superposition des champs Bx(X) (idéal 170, avant 180 puis après 190 correction) zoomée au centre de la chambre 3 (Z=0, Y=0),

**[Fig. 11]** la figure 11 est une vue de coupe, perpendiculairement à l'axe longitudinal Y, d'un deuxième mode de réalisation d'électro-aimant 1 selon l'invention,

**[Fig. 12]** la figure 12 est la carte de champ magnétique Bz(X) pour Z=0 et Y=0 générée sous 1 kA du deuxième mode de réalisation de la figure 11,

**[Fig. 13]** la figure 13 est sur sa partie a) une vue de coupe, perpendiculairement à l'axe longitudinal Y, d'un troisième mode de réalisation d'électro-aimant 1 selon l'invention ; et est sur sa partie b) la carte de champ magnétique Bz(X) pour Z=0 et Y=0 générée sous 1 kA du troisième mode de réalisation de la figure 13a),

**[Fig. 14]** la figure 14 est sur sa partie a) une vue de coupe, perpendiculairement à l'axe longitudinal Y, d'un quatrième mode de réalisation d'électro-aimant 1 selon l'invention ; et est sur sa partie b) la carte de champ magnétique Bz(X) pour Z=0 et Y=0 générée sous 1 kA du quatrième mode de réalisation de la figure 14a),

**[Fig. 15]** la figure 15 est une vue tridimensionnelle des connecteurs 7 et de leurs connexions électriques en série pour le premier mode de réalisation de la figure 7,

**[Fig. 16]** la figure 16 illustre le champ magnétique vertical Bz selon l'axe « S » ou Y longitudinal pour différentes positions X intéressantes, dans le cas de connexions en série non optimisées entre les connecteurs 7 du premier mode de réalisation de la figure 7 et donc différentes de celles illustrées en figure 15,

**[Fig. 17]** la figure 17 illustre le champ magnétique vertical Bz selon l'axe « S » ou Y longitudinal pour différentes positions X intéressantes, dans le cas des connexions en série optimisées entre les connecteurs 7 du premier mode de réalisation de la figure 7 illustrées en figure 15.

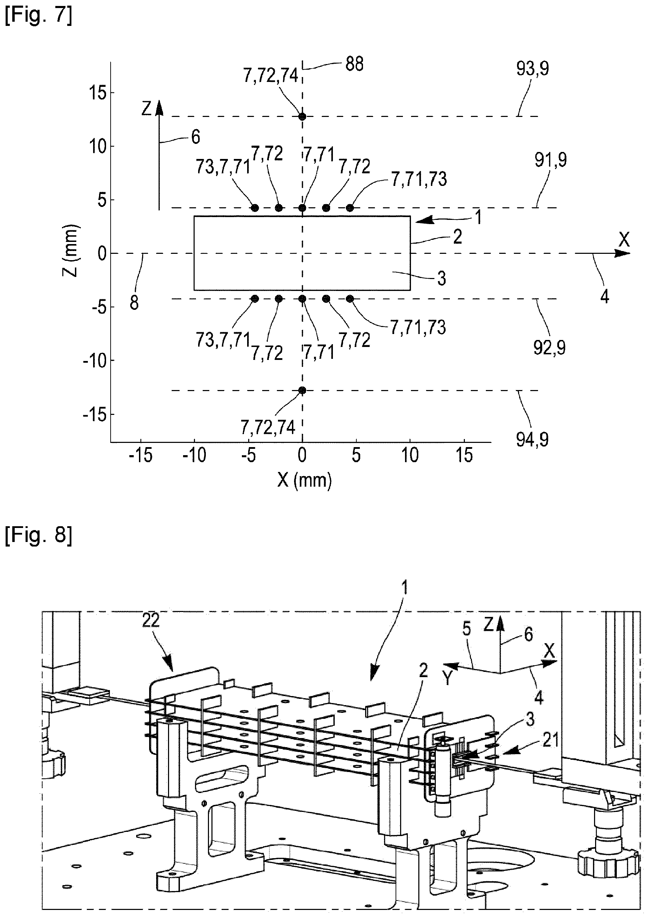

Chacune des figures 7, 11, 13a), et 14a) est une vue de coupe, perpendiculairement à l'axe longitudinal Y, d'un mode de réalisation d'électro-aimant 1 selon l'invention, au milieu de l'aimant 1 le long de l'axe Y (i.e. pour Y=0)

Tout d'abord, on remarque qu'une homothétie d'un aimant MIK type Bessy II selon l'état de l'art illustré en figure 3, avec pour objectif de ramener les crêtes de la figure 4 situées à plus ou moins 10 mm à des positions plus proches du centre (quelques millimètres de la zone de champ nul pour le faisceau stocké), aurait pour effet de déplacer chaque crête vers de le centre de l'aimant. Malheureusement, pour avoir cette crête dans une ouverture dynamique entre 3 et 5 mm, cela impose d'avoir les conducteurs 70 pratiquement au contact du faisceau stocké, ce qui est un non-sens.

La modification de l'aimant selon l'état de l'art de la figure 3 est donc loin d'être facile ou évidente pour l'homme du métier cherchant à résoudre les problèmes techniques à la base de la présente invention.

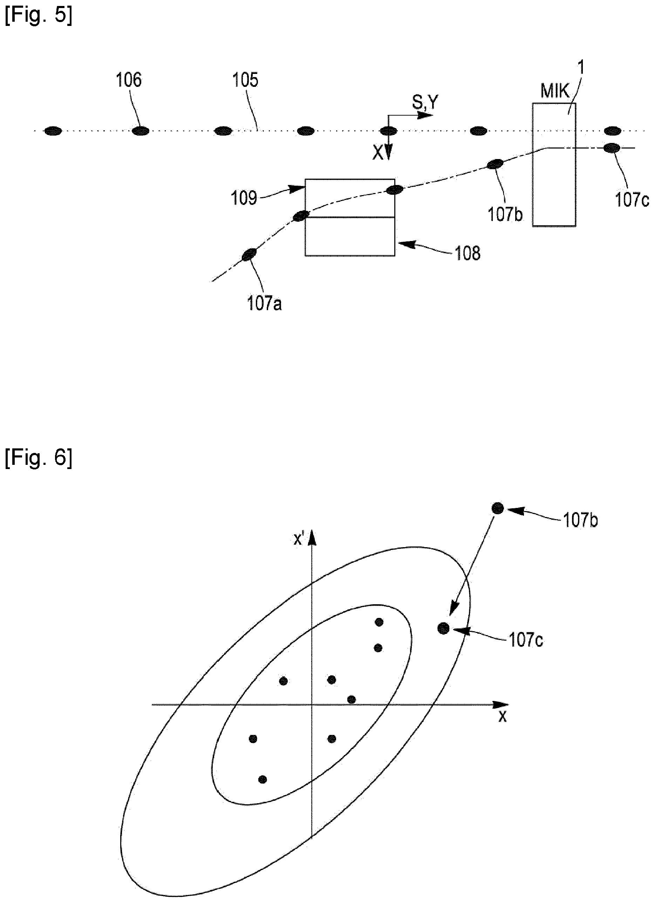

On va maintenant, en référence aux figures 5 à 10 et 15 à 17, présenter un premier mode de réalisation d'électro-aimant 1 selon l'invention.

Comme illustré sur les figures 7 et 8, cet électro-aimant 1 multipolaire pour l'injection de particules, de préférence d'électrons ou positrons, comprend :

- un conduit 2 creux, agencé pour la conduite de particules à l'intérieur de son creux 3 (de préférence au centre ou sensiblement au centre de ce creux 3), ce creux 3 (aussi appelé « chambre ») s'étendant selon un axe longitudinal Y aussi appelé S et aussi référencé 5,

- une pluralité de conducteurs filaires 7 placés parallèlement ou sensiblement parallèlement à l'axe longitudinal Y le long du conduit, électriquement reliés en série et agencés pour conduire du courant électrique.

Les conducteurs référencés 7 comprennent uniquement :

- des conducteurs principaux 7, dans les plans principaux 91, 92 (plusieurs conducteurs principaux 7, de préférence au moins quatre, par plan 91 ou 92), et

- de manière optionnelle, des conducteurs de réglage 7, dans les plans de réglage 93, 94 (au moins un conducteur de réglage 7 par plan 93 ou 94) Une valeur Y= ou y= ou S= ou s= définit une position le long de l'axe Y ou S.

Par sensiblement parallèle ou sensiblement parallèlement, on entend parallèle ou parallèlement avec un potentiel défaut d'angle d'inclinaison compris entre plus 5 degrés et moins 5 degrés, de préférence entre plus 1 degré et moins 1 degré.

Les conducteurs 7 sont de petite section, typiquement d'un rayon de 1 mm ou moins.

Les conducteurs 7 sont placés parallèlement ou sensiblement parallèlement à la tangente ou axe longitudinal « Y » (aussi appelé « S ») d'un anneau de stockage.

La figure 7 est une vue en coupe perpendiculairement à l'axe Y, sensiblement au centre de l'aimant 1 le long de son élongation le long de l'axe Y.

La longueur du conduit 2 le long de l'axe Y est typiquement de 100 à 300 mm, typiquement de 250 mm.

Le conduit 2 est en céramique.

Le conduit 2 est recouvert, sur sa face intérieure (i.e. en contact du volume de la chambre 3) par un dépôt métallique.

Ce dépôt est électriquement conducteur.

Ce dépôt est typiquement en titane. Ce dépôt permet la conduction du « courant image », induit par la circulation du faisceau d'électrons au centre de la chambre 3. Il est important au premier ordre de disposer des faces horizontales métallisées en regards des plans de conducteurs 91, 92.

Le sens du courant 71, 72 électrique parcourant les conducteurs filaires 7 n'est pas identique pour tous les conducteurs filaires 7.

L'électro-aimant 1 comprend autant de conducteurs filaires 7 conduisant le courant électrique dans un premier sens 71 (aussi appelé dans la présente description « sens positif », avec une densité de courant dans un conducteur 7 orientée dans le même sens que les électrons) que de conducteurs filaires 7 conduisant le courant électrique dans un deuxième sens 72 (aussi appelé dans la présente description « sens négatif », avec une densité de courant orientée dans le sens inverse des électrons) opposé au premier sens.

Les sens du courant électrique parcourant les conducteurs filaires 7 sont symétriques par rapport à un premier plan de symétrie 8 parallèle ou sensiblement parallèle à l'axe longitudinal Y et passant par le creux 3.

Les conducteurs filaires 7 sont répartis dans plusieurs plans porteurs 9 parallèles ou sensiblement parallèles au premier plan de symétrie 8, dont :

- deux plans porteurs principaux 91, 92 de positions symétriques par rapport au premier plan de symétrie 8 et situés à l'extérieur du creux 3, chaque plan porteur principal 91, 92 portant des conducteurs filaires principaux 7 qui conduisent le courant électrique dans le premier sens 71 et des conducteurs filaires 7 qui conduisent le courant électrique dans le deuxième sens 72 opposé au premier sens,
- deux plans porteurs de réglage 93, 94, de positions symétriques par rapport au premier plan de symétrie 8 et situés à l'extérieur du creux 3 de sorte que les plans porteurs principaux 91, 92 sont situés entre les plans porteurs de réglage 93, 94, chaque plan porteur de réglage 93, 94 portant au moins un conducteur de réglage 7.

Les conducteurs filaires 7 de chacun des plans 91, 92 sont répartis avec une périodicité spatiale le long de la direction X ou de l'axe X.

Les conducteurs filaires 7 de chacun des plans 93, 94 sont répartis avec une périodicité spatiale le long de la direction X ou de l'axe X.

Contrairement à l'état de l'art (figure 3), les conducteurs 7 générant le champ magnétique dans la chambre 3 ne sont pas portés uniquement par deux diagonales 881, 882 d'un carré (ou d'un rectangle).

Les conducteurs 7 ont une section rectangulaire de 500 $\mu$m $\times$ 135 $\mu$m (piste de circuit imprimé (« PCB ») classique). Dans une variante, les conducteurs 7 sont cylindriques de diamètre 400 $\mu$m.

Dans le présent document, on dit qu'un conducteur 7 est porté ou réparti dans un plan dès lors qu'au moins un segment droit (de préférence parallèle à l'axe Y et/ou de préférence perpendiculaire à la section constante, de préférence circulaire ou rectangulaire, de ce conducteur 7) est entièrement situé à l'intérieur du conducteur 7 considéré et est aussi situé dans ce plan, éventuellement avec une tolérance de position typiquement inférieure à +/-0,1 mm.

Chaque plan porteur principal 91, 92 porte au moins quatre conducteurs filaires 7, et porte dans ce mode de réalisation 5 conducteurs filaires 7.

Les deux plans porteurs principaux 91, 92 sont distants (le long de la direction Z perpendiculaire à Y) d'une distance entre eux supérieure ou égale à 7 mm.

Chaque plan porteur principal 91, 92 comprend uniquement des conducteurs filaires 7 se succédant les uns après les autres selon une alternance entre respectivement un ou deux conducteur(s) filaire(s) 7 conduisant le courant électrique dans le premier sens 71 puis respectivement un ou deux conducteur(s) filaire(s) 7 conduisant le courant électrique dans le deuxième sens 72 opposé au premier sens.

Plus précisément, chaque plan porteur principal 91, 92 comprend uniquement des conducteurs filaires 7 se succédant les uns après les autres selon une alternance entre respectivement un conducteur filaire 7 conduisant le courant électrique dans le premier sens 71 puis respectivement un conducteur filaire 7 conduisant le courant électrique dans le deuxième sens 72 opposé au premier sens.

L'électro-aimant 1 comprend des moyens motorisés (non illustrés) pour déplacer les plans porteurs de réglage 93, 94 parallèlement et/ou perpendiculairement au premier plan de symétrie 8.

Chaque plan porteur de réglage 93, 94 porte au moins un (et dans le cas de ce mode de réalisation exactement un) conducteur filaire 7.

Le sens du courant électrique parcourant les conducteurs filaires 7, 73 aux extrémités de la succession de conducteurs filaires 7 portés par les plans porteurs principaux 91, 92 est opposé au sens du courant électrique parcourant le conducteur filaire 7, 74 porté par chacun des plans porteurs de réglage 93, 94.

Les sens du courant électrique parcourant les conducteurs filaires 7 sont symétriques par rapport à un deuxième plan de symétrie 88 parallèle ou sensiblement parallèle à l'axe longitudinal Y et passant par le creux 3 et perpendiculaire au premier plan de symétrie 8.

Le creux 3 a :

- selon une direction ou axe vertical Z (aussi référencé 6) reliant les deux plans porteurs principaux 91,92 (i.e. perpendiculaire aux deux plans principaux 91, 92), une dimension d'au moins 6 mm,
- selon une direction ou axe horizontal X (aussi référencé 4) perpendiculaire à la direction Z et à l'axe longitudinal Y, une dimension 6 mm ou même d'au moins d'au moins 15 mm.

Une valeur Z= ou z= définit une position le long de la direction ou l'axe Z.

Une valeur X= ou x= définit une position le long de la direction ou l'axe X.

L'électro-aimant 1 comprend des moyens (non illustrés) pour générer le courant électrique, parcourant les conducteurs filaires 7, ce courant étant:

- de préférence pulsé (le caractère pulsé est possiblement recommandé par deux facteurs : il est préférable que l'électro-aimant 1 soit éteint avant le passage par le faisceau injecté 107 après une révolution dans l'anneau de stockage. Ensuite, comme il est nécessaire d'avoir des courants élevés pour obtenir les champs magnétiques Bz désirés, il est préférable recourir à des courants impulsionnels, sans quoi l'aimant 1 risquerait d'être détruit), et
- supérieur à 500 Ampères (et de préférence inférieur à 10000 Ampères : les limitations en courant crête viennent de l'échauffement de l'aimant (effet fusible des conducteurs 7), de l'inductance de l'aimant 1 et de sa tenue à la haute tension, induite par le caractère pulsé).

Le nombre de conducteurs filaires 7 placés parallèlement ou sensiblement parallèlement à l'axe longitudinal Y le long du conduit 2 et reliés en série est supérieur ou égal à 12.

Le nombre de conducteurs filaires 7 placés parallèlement ou sensiblement parallèlement à l'axe longitudinal Y le long du conduit 2 et reliés en série est inférieur ou égal à 32.

Le nombre de conducteurs filaires 7 placés parallèlement ou sensiblement parallèlement à l'axe longitudinal Y le long du conduit 2 et reliés en série est égal à 12.

Ce mode de réalisation comprend donc 12 conducteurs 7.

Ces conducteurs sont disposés en 2 ensembles (un ensemble par plan 91 ou 92) de plusieurs (cinq) conducteurs 7 parallèles ou sensiblement parallèles (et coplanaires) et 2 ensembles (un ensemble par plan 93, 94) d'au moins un (exactement un) conducteur 7 externe, dit de réglage. La longueur de l'aimant 1 est typiquement de 250 mm.

Les caractéristiques structurelles détaillées de ce mode de réalisation sont les suivantes :

- longueur des conducteurs 7 le long de l'axe Y : 250 mm (mais pouvant varier selon la longueur désirée)
- ouverture de la chambre 3 le long de la direction ou l'axe X : 20 mm (mais pouvant varier selon les besoins)
- ouverture de la chambre 3 le long de la direction ou l'axe Z : au moins 6 mm, de préférence 8 mm
- périodicité spatiale des conducteurs 7 dans chacun des plans 91, 92 le long de la direction ou l'axe X : 2,337 mm
- périodicité spatiale des conducteurs 7 dans chacun des plans 93, 94 le long de la direction ou l'axe X : Non applicable
- distance entre les plans 91 et 92 le long de la direction ou l'axe Z : 8,308 mm
- distance entre les plans 91 et 93 le long de la direction ou l'axe Z, pour au moins une position des moyens pour déplacer les plans : 8.536 mm
- course de chacun des plans 93 et 94 le long de la direction ou l'axe Z et/ou de l'axe X : au moins 1 mm, typiquement 2 mm

On considère le point X=0 et Z=0 le centre du creux 3, i.e. le centre du disque formant sa section circulaire (perpendiculairement à Y) ou l'intersection des diagonales du rectangle formant sa section rectangulaire (perpendiculairement à Y).

Les faisceaux stocké 106 et injectés 107 sont typiquement en Z = 0.

Le faisceau stocké 106 est en X = 0.

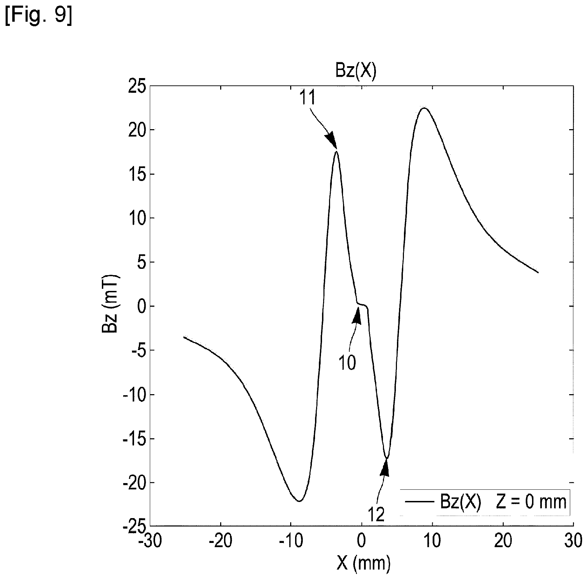

En référence à la figure 9, les conducteurs filaires 7 et leur courant 71, 72 sont agencés pour générer un champ magnétique dont la composante Bz(X) selon la direction Z (reliant les deux plans porteurs principaux 91, 92 et perpendiculaire aux plans principaux 91, 92) et variant en fonction de la coordonnée selon la direction X perpendiculaire à la direction Z et à l'axe longitudinal Y :

- a une valeur nulle pour une position de champ nul 10 située dans le creux 3 du conduit, de préférence située au centre (X=0, Z=0) ou sensiblement au centre (i.e. de préférence Z=0 (ou -1mm<Z<1mm) et -7mm<X<7mm) d'une coupe transversale (perpendiculairement à Y) du creux 3 du conduit , et a un champ inférieur $5\mu T$ (de préférence 2 $\mu T$) sur un intervalle selon la direction X d'au moins 0,05 mm autour de la position de champ nul (permettant d'assurer la transparence de l'injection vis-à-vis du faisceau stocké) pour cette réalisation présentant une forme de champ nul de type octupolaire, et

- a une valeur d'au moins une crête, de préférence d'au moins deux crêtes de part et d'autre de la position de champ nul, d'au moins 10mT, de préférence d'au moins 15mT, pour une position 11, 12 en Z=0 et à une distance A de la position de champ nul le long de la direction ou l'axe X et pour une crête de courant électrique de 1 kA dans les conducteurs filaires, cette crête de champ magnétique étant située dans le creux du conduit, et de préférence avec A supérieur ou égal à 3mm et/ou inférieur ou égal à 7mm (ou même inférieur ou égal à 5mm).

Par crête de Bz(x), on entend une position du champ Bz(x) pour laquelle :

- la dérivée $d(Bz(X))/dX=0$
- la dérivée seconde $d^2(Bz(X))/dX^2<0$ si $Bz(X)>0$
- la dérivée seconde $d^2(Bz(X))/dX^2>0$ si $Bz(X)<0$

La composante Bz(X) a, pour la position de champ nul 10, de préférence une allure :

- quadrupolaire (en Bz(X) localement proportionnel à X au premier ordre à la position de champ nul 10), ou
- sextupolaire (en Bz(X) localement proportionnel à $X^2$ au premier ordre à la position de champ nul 10), ou
- octupolaire (en Bz(X) localement proportionnel à $X^3$ au premier ordre à la position de champ nul 10).

La composante Bz(X) a, pour la position de champ nul 10, de préférence une allure sextupolaire ou d'ordre magnétique supérieur.

Dans le présent mode de réalisation, Bz(X) a, pour la position de champ nul 10, une allure octupolaire.

Comme illustré en figure 9, on retrouve le zéro de champ magnétique 10 de forme octupolaire en X = 0 mm. Les crêtes 11, 12 pour injecter dans le cadre de nos spécifications sont situées en X = +/- 3.5 mm.

Les crêtes plus éloignées en X = +/- 8.8 mm ne sont pas utilisables pour des spécifications de faible ouverture dynamique mais pourraient convenir pour d'autres anneaux de stockage. Par homothétie de cette topologie, la plus petite transition crête-zéro serait également de 3 mm, avec une réduction de l'ouverture faisceau à 6 mm en vertical.

Les deux conducteurs 7 de réglages des plans 93 et 94 ne servent qu'à affiner la forme du zéro de champ magnétique, ils ne modifient pas significativement la position de la crête à 3,5 mm de la carte de champ magnétique.

Comme décrit précédemment, ce mode de réalisation d'électro-aimant 1 comporte deux conducteurs 7 de réglage (sur les plans 93 et 94) qui permettent de régler la forme du champ magnétique au centre (valeur dipolaire et quadrupolaire), sans impacter significativement la distribution globale de champ magnétique Bz : la crête de champ magnétique est toujours positionnée à 3,5 mm.

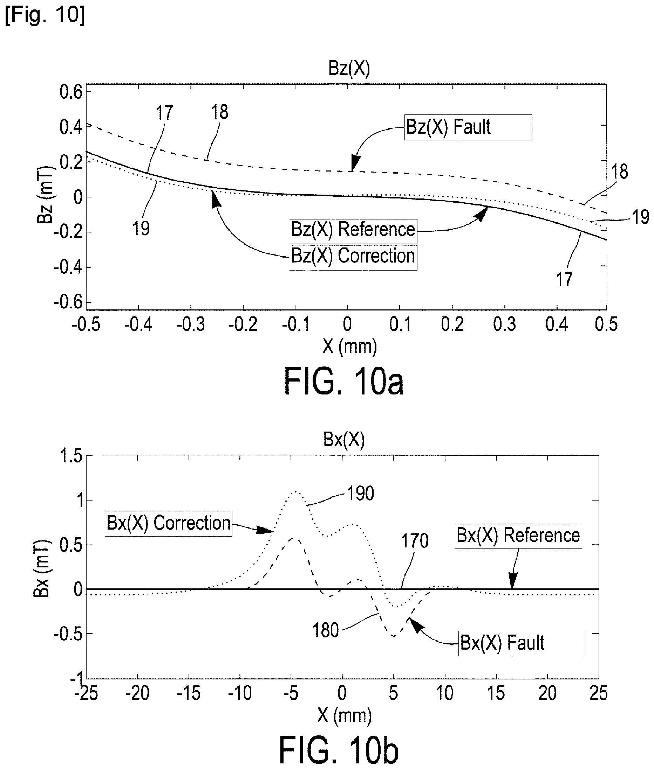

Pour illustrer ce réglage, on suppose dans les figures 10a) et 10b) que les cinq conducteurs 7 coplanaires du demi-aimant supérieur du plan 91 ne sont plus parfaitement parallèles aux cinq conducteurs 7 inférieurs du plan 92, qui restent à leurs positions nominales. C'est-à-dire que les cinq conducteurs 7 supérieurs ont une rotation par rapport au conducteur 7 C1 (celui au centre des cinq) de 0,6 degré, ce qui représente un défaut typique de montage de l'aimant.

La figure 10a) représente la superposition du champ Bz de référence 17 (c'est-à-dire avec un aimant idéal sans défauts mécaniques), le champ Bz 18 avec les défauts mécaniques (« Bz(X) Fault ») et le champ Bz 19 corrigé par déplacement des conducteurs 7 de réglages des plans 93 et 94 (« Bz(X) Correction »).

On constate que les courbes superposées sont quasiment identiques. Les crêtes à 3,5 mm ne sont globalement pas affectées par ces défauts mécaniques.

Dans la figure 10a), on se focalise sur le champ Bz au centre de l'aimant, à l'emplacement du faisceau stocké (X = 0 mm). Le champ Bz de défaut avant correction fait apparaitre un défaut dipolaire important (200 $\mu$T environ). La correction permet de retrouver un niveau de champ magnétique pratiquement identique au champ Bz de référence.

On note que pour cet exercice, les conducteurs 7 haut du plan 93 et bas du plan 94 n'ont été déplacés respectivement que dans une seule direction : le conducteur 7 haut du plan 93 ne pouvait être déplacé que selon la direction ou l'axe vertical Z et le conducteur bas 7 du plan 94 ne pouvait être déplacé que selon la direction ou l'axe horizontal X.

Pour parvenir à cette correction, cela a nécessité un déplacement du conducteur 7 haut du plan 93 de 0,5 mm (en vertical selon Z) et du conducteur 7 bas du plan 94 bas de -0,1 mm (en horizontal selon X).

Fixer ainsi les degrés de liberté permet rapidement de corriger le champ Bz. Il en résulte, en référence à la figure 10b), que l'autre composante Bx selon la direction ou l'axe X du champ est dégradée par cette correction. La figure 10b) représente la superposition du champ Bx de référence 170 (c'est-à-dire avec un aimant idéal sans défauts mécaniques), le champ Bx 180 avec les défauts mécaniques et le champ Bx 190 corrigé par déplacement des conducteurs 7 de réglages des plans 93 et 94 (« Bz(X) Correction »).

Toutefois, on peut aussi corriger conjointement Bz et Bx avec déplacement des conducteurs 7 de réglage dans toutes les directions verticale Z et horizontale X pour chacun de ces conducteurs de réglage 7.

A chaque extrémité 21, 22 de l'aimant 1 le long de Y, les conducteurs 7 sont reliés deux à deux pour former un unique circuit électrique. Le courant électrique (pulsé) est donc identique dans tous les conducteurs 7.

On alimente cet aimant 1 avec une impulsion de courant électrique de 1kA.

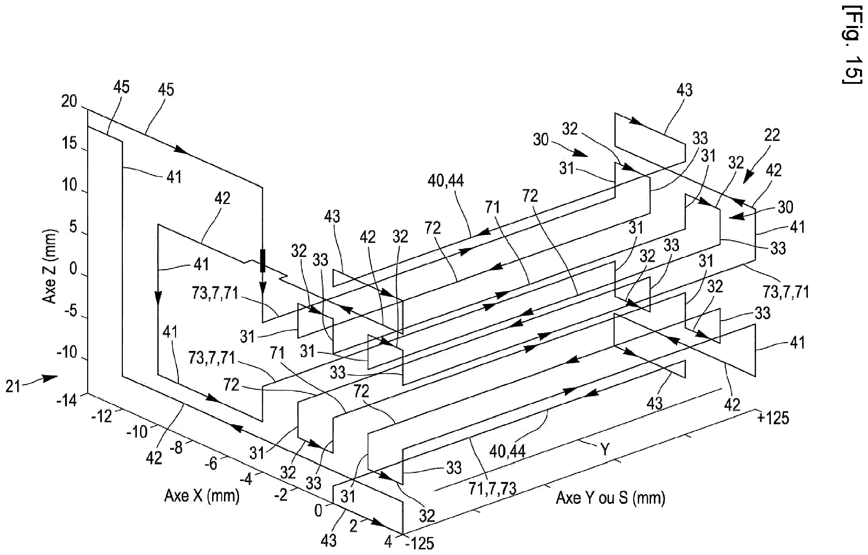

Comme illustré en Figure 15, à chacune des deux extrémités 21, 22 de l'électro-aimant 1 le long de l'axe longitudinal Y, des conducteurs filaires 7 voisins sont reliés par paire par une liaison en série, cette liaison en série comprenant une boucle 30 s'étendant dans un plan perpendiculaire au premier plan de symétrie 8, cette boucle fermée 30 comprenant :

- Une première partie 31 de la boucle partant d'un premier conducteur filaire 7 de la paire, perpendiculairement à l'axe longitudinal Y et au plan 8
- Une troisième partie 33 de la boucle rejoignant un deuxième conducteur filaire 7 de la paire, perpendiculairement à l'axe longitudinal Y et au plan 8
- Une deuxième partie 32 de la boucle reliant la première partie 31 de la boucle à la troisième partie 33 de la boucle, parallèlement ou sensiblement parallèlement à la direction ou l'axe X et au plan 8

les deuxièmes parties 32 de toutes ces boucles 30 étant, pour une extrémité donnée 21 ou 22 des conducteurs filaires 7, parcourues par le courant électrique dans un même sens. On remarque même que les deuxièmes parties 32 de toutes ces boucles 30 sont, pour l'ensemble les deux extrémités 21 et 22, parcourues par le courant électrique dans un même sens.

De chacun des deux côtés du premier plan de symétrie 8, l'électro-aimant 1 comprend un conducteur auxiliaire 40 reliant électriquement en série un conducteur filaire 7 à un autre conducteur filaire 7 ou à une parmi deux bornes d'alimentation électrique 45, d'une première extrémité respectivement 21 ou 22 de l'électro-aimant 1 le long de la direction longitudinale Y à une deuxième extrémité respectivement 22 ou 21 de l'électro-aimant 1 le long de la direction longitudinale Y, ce conducteur auxiliaire 40 comprenant, à chacune des deux extrémités 21, 22 de l'électro-aimant 1 le long de la direction Y, les parties suivantes reliées dans cet ordre en série :

- une première partie 41 reliée électriquement à un conducteur filaire 7 ou à une des deux bornes 45 et s'étendant de préférence perpendiculairement au premier plan de symétrie 8
- une deuxième partie 42 s'étendant parallèlement ou sensiblement parallèlement à la direction ou l'axe X et au plan 8 et agencée pour être parcourue par un courant électrique dans un sens opposé aux deuxièmes parties 32 de boucles situées à la même extrémité 21 ou 22 de l'électro-aimant 1 le long de la direction longitudinale Y, de sorte que ces deuxièmes parties 32 de boucles soient situées entre le premier plan de symétrie 8 et la deuxième partie 42 du conducteur auxiliaire 40,
- optionnellement, une troisième partie 43 s'étendant parallèlement ou sensiblement parallèlement à la direction ou l'axe X et au plan 8 et agencée pour être parcourue par un courant électrique dans un même sens que les deuxièmes parties 32 de boucles situées à la même extrémité 21 ou 22 de l'électro-aimant 1 le long de la direction longitudinale Y, de sorte que la deuxième partie 42 du conducteur auxiliaire 40 soit située entre le premier plan de symétrie 8 et la troisième partie 43 du conducteur auxiliaire 40,
- une quatrième ou dernière partie 44 reliant les deux extrémités 21, 22 de l'électro-aimant le long de la direction longitudinale Y, plus exactement reliant une deuxième 42 ou troisième 43 partie de conducteur auxiliaire 40 à l'extrémité 21 à une deuxième 42 ou troisième 43 partie de conducteur auxiliaire 40 à l'autre extrémité 22.

Les parties 41, 42, 43 et 44 peuvent être reliées en série entre elles par des parties intermédiaires, mais uniquement par des parties intermédiaires parallèles ou sensiblement parallèles à la direction ou l'axe Z.

Cette disposition permet de minimiser la génération des champs magnétiques (Bx le long de X, Bz le long de Z & Bs=By le long de S ou Y ) parasites par les connexions séries entre les conducteurs 7 ; ces champs magnétiques parasites peuvent perturber le faisceau stocké et donc réduire la transparence de l'injection.

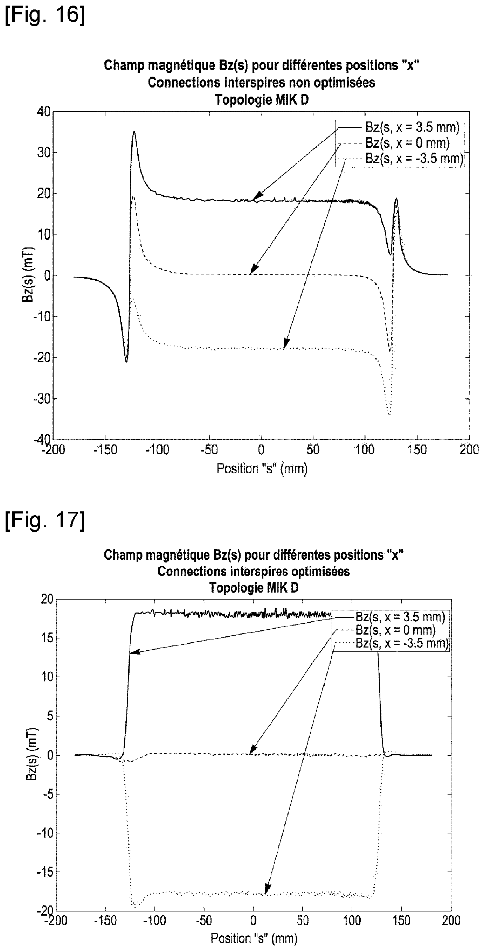

La figure 16 illustre, dans un cas pour lesquels les connexions non optimisées de boucles 30 entre les conducteurs 7 seraient contenues à plat dans chacun des plans 91, 92, 93 et 94, le champ magnétique vertical Bz selon la direction ou l'axe Z en fonction la coordonnée « S » ou Y longitudinale pour différentes positions X intéressantes, à savoir positions des faisceaux injectés 107 en X=+ 3.5 mm et X=-3.5 mm et position du faisceau stocké en X = 0 mm (Z = 0 dans tous les cas). L'aimant 1 s'étend de Y=-125 mm à Y=+ 125 mm. Du fait de cette connectique simpliste entre conducteurs 7, on génère sur le faisceau stocké (X = 0 mm) des pics de champ magnétique Bz parasites non désirés, qui impacteraient la transparence du mode d'injection Top-Up (c'est-à-dire que le faisceau stocké 106 ne doit voir aucune perturbation liée à la réinjection de faisceaux). On constate également des pics aux positions des faisceaux injectés (X = +/- 3.5 mm), ce qui n'est pas très désirable.

En référence à la figure 17, on trace à nouveau les trois courbes Bz(S) avec les mêmes positions X que pour le cas non optimisé de la figure 16, mais cette fois ci dans le cas des connexions optimisée entre conducteurs 7 comme illustré sur la figure 15. On constate que sur le faisceau stocké (X = 0 mm), le champ résiduel est largement minimisé par rapport au cas initial. Au niveau des faisceaux injectés 107, on retrouve un profil de champ magnétique longitudinal de meilleure qualité avec pics de bien moindre amplitude.

Comme illustré à la figure 9, l'électro-aimant 1 selon ce premier mode de réalisation permet donc de générer une crête de champ magnétique Bz proche de l'axe (typiquement de 3 à 4 mm par rapport aux besoins actuels), avec un champ nul au centre de profil sextupolaire ou octupolaire et avec une ouverture verticale libre de chambre à vide acceptable pour les nouvelles machines (minimum 6 mm).

L'électro-aimant 1 est donc un MIK :

- dont la crête 11 et/ou 12 de champ magnétique Bz est dans l'ouverture dynamique (entre 3 et 5 mm),
- laissant une ouverture pour le faisceau stocké 106 conséquente (typiquement 6 mm (vertical Z) × 6 à 15 mm (horizontal X))
- générant une déviation suffisante du faisceau injecté (1 à 3 mrad typiquement, de préférence 1 mrad +1/-0.5 mrad pour une énergie faisceau nominale de 2.75 GeV +/- 6 %)
- conservant un champ magnétique Bz nul ou quasi nul au centre de l'aimant 1 pour ne pas perturber le faisceau stocké.

En référence à la figure 9, on constate que les évolutions de champ magnétiques par rapport à la position transverse X sont grandes, ce qui est le but recherché pour ce genre d'aimants. On peut donc placer le faisceau stocké 106 à X = 0 mm, et placer le faisceau injecté 107 à X=+/- 3.5 mm où on se trouve sur une petite crête locale de champ magnétique.

L'intérêt pour le faisceau stocké 106 est évidement de disposer d'un champ magnétique Bz nul (ici avec un forme octupolaire). L'intérêt pour le faisceau injecté 107 est de disposer d'une crête 11, 12 de champ magnétique Bz, à une distance fixe du faisceau stocké 106. La valeur crête (environ 18 mT) pour le faisceau injecté 107 est intéressante, compte-tenu du besoin d'avoir une progression rapide de la zone de non-champ (faisceau stocké) à la zone de champ fort et « plat » pour le faisceau injecté.

Le fait que le nombre de conducteurs 7 est réduit est intéressant, car pour une induction magnétique équivalente, on a une inductance de l'aimant plus faible, toujours appréciable dans le domaine des systèmes pulsés.

Comme illustré à la figure 5, qui est une vue de haut d'une section d'injection utilisant l'aimant 1 dans un anneau de stockage de 4ème génération, on constate le gain de place de cette solution par rapport à une section droite munie de quatre aimants kickers.

Comme illustré à la figure 6, par rapport à l'injection avec quatre kickers, l'aimant 1 parvient à dévier le faisceau injecté 107 directement dans l'ouverture dynamique sans devoir dévier le faisceau stocké 106 à l'aide d'une déviation d'orbite fermée.

Dans la figure 6, on retrouve l'espace des phases x et x', sur lequel s'ajoute l'ouverture dynamique. En sortie de septum 109, le faisceau injecté 107b est encore momentanément en dehors de l'ouverture dynamique. Evidemment, si rien n'est fait, il ne sera pas capturé par l'ouverture dynamique et donc rapidement perdu. L'aimant MIK 1 va donc dévier le faisceau injecté, afin que celui-ci soit capturé dans cette ouverture dynamique en position 107c. A partir de là, ce dernier subira une oscillation bêtatron et s'amortira dans le faisceau déjà stocké.

Le MIK référencé 1 ne perturbant pas le faisceau stocké 106 (car ne générant pas de champ magnétique au centre de l'aimant 1), ce type d'injection assure une excellente transparence du processus d'injection Top-Up.

L'aimant 1 génère un champ magnétique dont une des composantes, Bz - c'est-à-dire le champ magnétique vertical - permet de dévier sur une trajectoire stable des faisceaux d'électrons injectés 107 provenant d'un booster sans perturber les paquets d'électrons 106 circulant déjà sur leur trajectoire normale dans l'anneau de stockage. On obtient ainsi une injection Top-Up transparente, c'est-à-dire qu'on maintient constant le courant d'électrons stockés par injection régulière de paquets d'électrons « frais » sans perturbation notable sur le faisceau d'électrons stocké et donc sur les faisceaux de photons produits pour les lignes de lumière.

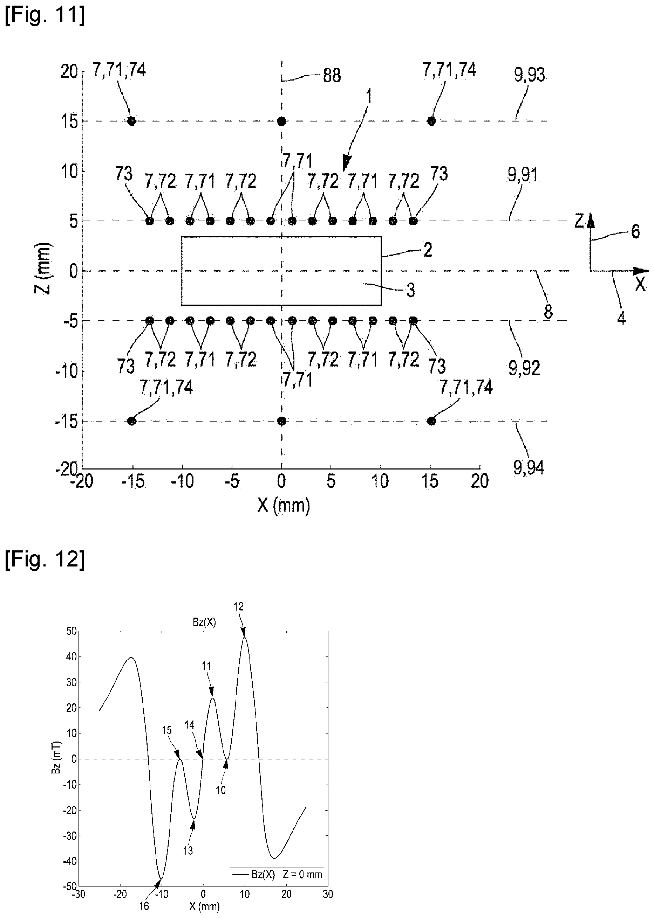

On va maintenant, en référence aux figures 11 et 12, présenter un deuxième mode de réalisation d'électro-aimant 1 selon l'invention.

Seules ses différences par rapport au premier mode de réalisation des figures 5 à 10 et 15 à 17 seront décrits.

Comme illustré sur la figure 11, chaque plan porteur principal 91, 92 porte 14 conducteurs filaires 7.

Chaque plan porteur principal 91, 92 comprend uniquement des conducteurs filaires 7 se succédant les uns après les autres selon une alternance entre respectivement deux conducteurs filaires 7 conduisant le courant électrique dans le premier sens 71 puis respectivement un ou deux conducteurs filaires 7 conduisant le courant électrique dans le deuxième sens 72 opposé au premier sens.

Chaque plan porteur de réglage 93, 94 porte exactement 2 conducteurs filaires 7.

Chaque plan porteur de réglage 93, 94 comprend des conducteurs filaires 7 conduisant uniquement le courant électrique dans le premier sens 71.

Le nombre de conducteurs filaires 7 placés parallèlement ou sensiblement parallèlement à l'axe longitudinal Y le long du conduit et reliés en série est égal à 32.

Ce mode de réalisation comprend donc 32 conducteurs 7 disposés en 2 ensembles de 14 conducteurs 7 parallèles ou sensiblement parallèles (et coplanaires) et 4 conducteurs 7 externes, dits de réglage. La longueur de l'aimant est typiquement de 250 mm.

Les sens 72 du courant électrique parcourant les conducteurs filaires 7, 73 aux extrémités de la succession de conducteurs filaires 7 portés par les plans porteurs principaux 91, 92 est opposé au sens 71 du courant électrique parcourant les conducteurs filaires 7, 74 aux extrémités de la succession de conducteurs filaires 7 portés par les plans porteurs de réglage 93, 94.

Comme illustré sur la figure 12, le faisceau stocké 106 ne passe pas au centre géométrique de l'aimant 1. L'aimant 1 est décalé selon la direction ou l'axe X pour que son zéro de champ magnétique 10 coïncide avec la position de faisceau stocké 106.

On retrouve les zéros 10, 15 de champ magnétique de forme sextupolaire en X = +/- 5.82 mm (références 10 et 15). Les crêtes (références 11 et 13) pour injecter dans le cadre de nos spécifications sont situées en X = +/- 2.32 mm, c'est-à-dire que l'on obtient une transition crête-zéro effective de 3,5 mm comme spécifié. L'aimant 1 est décentré par rapport au faisceau stocké 106 mais cela n'est pas a priori gênant ; la référence 10 peut être décalée en X=0 si, par rapport à la figure 12 on décale les conducteurs 7 par rapport à chambre 3 parallèlement ou sensiblement parallèlement à X.

Les deux crêtes 11 et 12 sont exploitables pour le zéro de la référence 10.

Les autres crêtes 13, 16 sont aussi exploitables, en fonction de la position de champ nul 10, 14 ou 15 utilisée.

Les conducteurs de réglages 7 ne servent qu'affiner la forme du zéro de champ magnétique, ils ne modifient pas la structure en « montagnes russes » de la carte de champ magnétique. Régler le zéro de champ magnétique finement par déplacement fin de ces conducteurs de réglage 7 permet d'améliorer in fine la transparence de l'injection Top-Up pour compenser les défauts mécaniques de fabrication de l'aimant.

Dans le présent mode de réalisation, Bz(X) a, pour la position de champ nul 10, une allure sextupolaire.

Dans le présent mode de réalisation, Bz(X) a, pour la position de champ nul 15, une allure sextupolaire.

Dans le présent mode de réalisation, Bz(X) a, pour la position de champ nul 14, une allure quadrupolaire.

Par homothétie de cette topologie, la plus petite transition crête-zéro serait de 3 mm.

En référence à la figure 12, on constate que les évolutions de champ magnétiques par rapport à la position transverse X sont grandes, ce qui est le but recherché pour ce genre d'aimants. On peut donc placer le faisceau stocké à X = +/- 5.82 mm (où le champ magnétique Bz est nul), et placer le faisceau injecté à +/- 2.32 mm où se trouve sur une petite crête locale de champ magnétique Bz.

L'intérêt pour le faisceau stocké 106 est évidemment de disposer d'un champ magnétique Bz nul (ici avec un forme sextupolaire). L'intérêt pour le faisceau injecté 107 est de disposer d'une crête de champ magnétique Bz, à une distance fixe du faisceau stocké 106. La valeur crête (un peu plus de 20mT) pour le faisceau injecté 107 est intéressante, compte-tenu du besoin d'avoir une progression rapide de la zone de non-champ (faisceau stocké 106) à la zone de champ fort et « plat » pour le faisceau injecté 107.

La séparation entre faisceaux stocké 106 et injecté 107 est de 3,5 mm et c'est donc une des motivations de concevoir ces nouveaux aimants 1.

L'autre crête 12 (à 48 mT) n'est pas facilement exploitable en l'état car la distance séparant la crête du zéro de champ magnétique est de 4,1 mm. Toutefois, on peut modifier l'aimant 1 par homothétie et ou rotation de conducteurs 7 pour exploiter cette crête au mieux, au détriment de l'ouverture physique pour le passage des faisceaux.

Par rapport au mode de réalisation de la Figure 7, le mode de réalisation de la figure 11, du fait de son nombre élevé de conducteurs 7, va engendrer une inductance importante, préjudiciable au fonctionnement pulsé de l'aimant : il demandera donc de préférence des hautes tensions élevées (typiquement d'au moins 6kV ou 10 kV) qui complexifieront sa conception mécanique.

Les caractéristiques structurelles détaillées de ce mode de réalisation sont les suivantes :

- longueur des conducteurs 7 le long de l'axe Y : 250 mm (mais pouvant varier selon la longueur désirée)
- ouverture de la chambre 3 le long de la direction ou l'axe X : 20 mm (mais pouvant varier selon les besoins)
- ouverture de la chambre 3 le long de la direction ou l'axe Z : au moins 6 mm, de préférence 8 mm
- périodicité spatiale des conducteurs 7 dans chacun des plans 91, 92 le long de la direction ou l'axe X: 2.046 mm
- périodicité spatiale des conducteurs 7 dans chacun des plans 93, 94 le long de la direction ou l'axe X: 30.88 mm
- distance entre les plans 91 et 92 le long de la direction ou l'axe Z: 10.234 mm
- distance entre les plans 91 et 93 le long de la direction ou l'axe Z, pour au moins une position des moyens pour déplacer les plans : 10.323 mm
- course de chacun des plans 93 et 94 le long de la direction ou de l'axe Z et/ou de l'axe X: au moins 1 mm, typiquement 2 mm

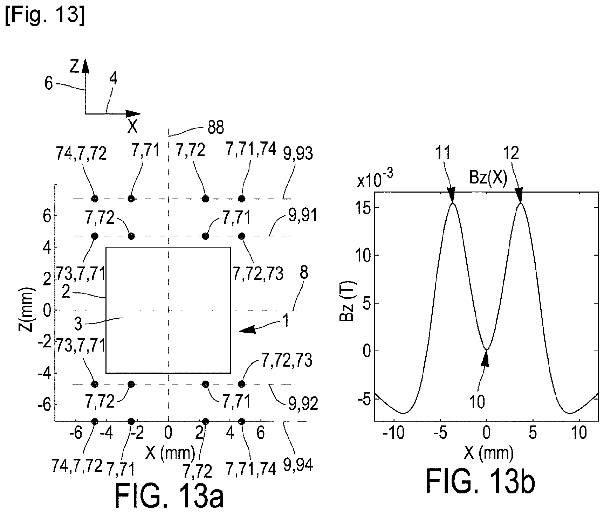

On va maintenant, en référence à la figure 13, présenter un troisième mode de réalisation d'électroaimant 1 selon l'invention.

Seules ses différences par rapport au premier mode de réalisation des figures 5 à 10 et 15 à 17 seront décrits.

Comme illustré sur la figure 13a), chaque plan porteur principal 91, 92 porte 4 conducteurs filaires 7.

Chaque plan porteur principal 91, 92 comprend uniquement des conducteurs filaires 7 se succédant les uns après les autres selon une alternance entre un conducteur filaire 7 conduisant le courant électrique dans le premier sens 71 puis respectivement un conducteur filaire 7 conduisant le courant électrique dans le deuxième sens 72 opposé au premier sens.

Chaque plan porteur de réglage 93, 94 porte exactement 4 conducteurs filaires 7.

Chaque plan porteur de réglage 93, 94 comprend des conducteurs filaires 7 se succédant les uns après les autres selon une alternance entre un conducteur filaire 7 conduisant le courant électrique dans le premier sens 71 puis un conducteur filaire 7 conduisant le courant électrique dans le deuxième sens 72 opposé au premier sens.

Les sens 71 du courant électrique parcourant les conducteurs filaires 7, 73 aux extrémités de la succession de conducteurs filaires 7 portés par les plans porteurs principaux 91, 92 est opposé au sens 72 du courant électrique parcourant les conducteurs filaires 7, 74 aux extrémités de la succession de conducteurs filaires 7 portés par les plans porteurs de réglage 93, 94.

Le nombre de conducteurs filaires 7 placés parallèlement ou sensiblement parallèlement à l'axe longitudinal Y le long du conduit et reliés en série est égal à 16.

Les sens du courant électrique parcourant les conducteurs filaires 7 sont anti-symétriques par rapport au plan 88 parallèle ou sensiblement parallèle à l'axe longitudinal Y et passant par le creux 3 et perpendiculaire au premier plan de symétrie 8.

Comme illustré en Figure 13b), dans le présent mode de réalisation, Bz(X) a, pour la position de champ nul 10, une allure sextupolaire.

Les caractéristiques structurelles détaillées de ce mode de réalisation sont les suivantes :

- longueur des conducteurs 7 le long de l'axe Y : 250 mm (mais pouvant varier selon la longueur désirée)
- ouverture de la chambre 3 le long de la direction ou l'axe X : 20 mm (mais pouvant varier selon les besoins)
- ouverture de la chambre 3 le long de la direction ou l'axe Z : au moins 6 mm, de préférence 8 mm
- périodicité spatiale des conducteurs 7 dans chacun des plans 91, 92 le long de la direction ou l'axe X: 2,286 mm
- périodicité spatiale des conducteurs 7 dans chacun des plans 93, 94 le long de la direction ou l'axe X: 2,286 mm
- distance entre les plans 91 et 92 le long de la direction ou l'axe Z: 9.542 mm
- distance entre les plans 91 et 93 le long de la direction ou l'axe Z, pour au moins une position des moyens pour déplacer les plans : 2,286 mm
- course de chacun des plans 93 et 94 le long de la direction ou de l'axe Z et/ou de l'axe X: au moins 1 mm, typiquement 2 mm

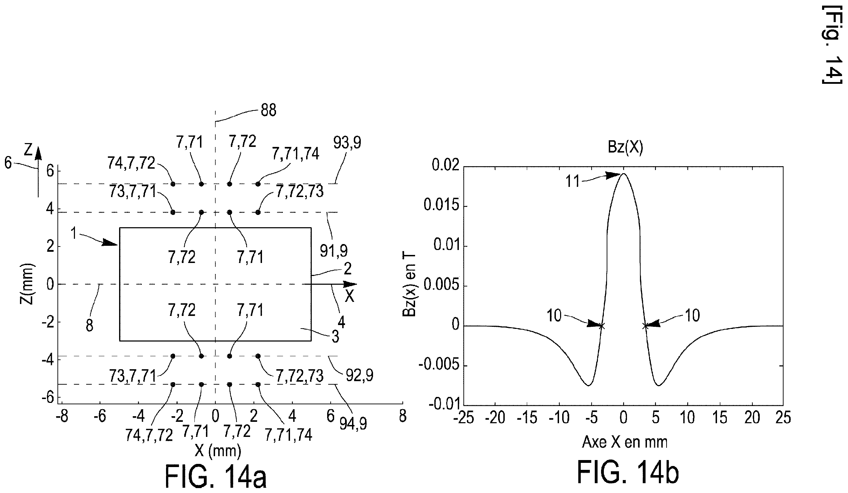

On va maintenant, en référence à la figure 14, présenter un quatrième mode de réalisation d'électro-aimant 1 selon l'invention.

Seules ses différences par rapport au mode de réalisation de la figure 13 seront décrits.

Dans le présent mode de réalisation, Bz(X) a, pour la position de champ nul 10, une allure quadrupolaire.

En outre, ce mode de réalisation ne comprend qu'une seule crête 11 d'au moins 10mT.

Contrairement aux précédents modes de réalisation, les conducteurs filaires 7 de chacun des plans 91, 92 ne sont pas répartis avec une périodicité spatiale le long de la direction X ou de l'axe X.

Contrairement aux précédents modes de réalisation, les conducteurs filaires 7 de chacun des plans 93, 94 ne sont pas répartis avec une périodicité spatiale le long de la direction X ou de l'axe X.

Les caractéristiques structurelles détaillées de ce mode de réalisation illustré en figure 14a) sont les suivantes :

- longueur des conducteurs 7 le long de l'axe Y : 250 mm (mais pouvant varier selon la longueur désirée)
- ouverture de la chambre 3 le long de la direction ou l'axe X : 20 mm (mais pouvant varier selon les besoins)
- ouverture de la chambre 3 le long de la direction ou l'axe Z : au moins 6 mm, de préférence 8 mm
- position spatiale des conducteurs 7 dans chacun des plans 91, 92 le long de la direction ou l'axe X: chacun des deux conducteurs 7 les plus proches du plan 88 est situé à 0.7448 mm du plan 88 ; chacun des deux conducteurs 7 les plus éloignés du plan 88 est situé à 2,234 mm du plan 88, l'aimant 1 étant symétrique par rapport au plan 88 pour les positions de ses conducteurs 7 et antisymétrique par rapport au plan 88 pour l'orientation des courants dans ces conducteurs 7.
- position spatiale des conducteurs 7 dans chacun des plans 93, 94 le long de la direction ou l'axe X: chacun des deux conducteurs 7 les plus proches du plan 88 est situé à 0.7448 mm du plan 88 ; chacun des deux conducteurs 7 les plus éloignés du plan 88 est situé à 2,234 mm du plan 88, l'aimant 1 étant symétrique par rapport au plan 88 pour les positions de ses conducteurs 7 et antisymétrique par rapport au plan 88 pour l'orientation des courants dans ces conducteurs 7.
- distance entre les plans 91 et 92 le long de la direction ou l'axe Z: 7.612 mm
- distance entre les plans 91 et 93 le long de la direction ou l'axe Z, pour au moins une position des moyens pour déplacer les plans : 1.489 mm
- course de chacun des plans 93 et 94 le long de la direction ou de l'axe Z et/ou de l'axe X : au moins 1 mm, typiquement 2 mm

Comme illustré en Figure 14b), son avantage est que l'on parvient à générer un vrai plateau de champ magnétique Bz (avec une dérivée spatiale nulle ou sensiblement nulle sur 1 mm environ), avec une distance A entre le centre du plateau 11 et le point de champ magnétique nul 10 de 3.5 mm.

On va maintenant décrire, en référence à la figure 6, un accélérateur de particules selon l'invention, de préférence d'électrons ou positrons, comprenant une source de rayonnement synchrotron, un anneau de stockage de particules chargées 106 circulant dans cet anneau, et un électro-aimant 1 selon l'une quelconque des modes de réalisation précédemment décrit et agencé pour l'injection de nouvelle particules 107 dans l'anneau.

On va maintenant décrire un mode de réalisation de procédé selon l'invention mis en oeuvre dans un quelconque des modes de réalisation d'électro-aimant 1 ou accélérateur de particules précédemment décrit.

Ce procédé comprend une génération du courant électrique, de préférence pulsé, parcourant les conducteurs filaires 7 et typiquement supérieur à 500 Ampères et/ou inférieur à 10000 Ampères.

Ce procédé comprend :

- une étape de conduite de particules, de préférence d'électrons ou positrons, à l'intérieur du creux 3 du conduit 2 creux, ce creux s'étendant selon l'axe longitudinal Y 5,
- une étape de conduite du courant électrique dans la pluralité de conducteurs filaires 7 placés parallèlement ou sensiblement parallèlement à l'axe longitudinal Y le long du conduit, et électriquement reliés en série.

Le sens du courant 71, 72 électrique parcourant les conducteurs filaires 7 n'est pas identique pour tous les conducteurs filaires 7.

L'électro-aimant 1 comprend autant de conducteurs filaires 7 conduisant le courant électrique dans le premier sens 71 que de conducteurs filaires 7 conduisant le courant électrique dans le deuxième sens 72 opposé au premier sens.

Les sens du courant électrique parcourant les conducteurs filaires 7 sont symétriques par rapport au premier plan de symétrie 8 parallèle ou sensiblement parallèle à l'axe longitudinal Y et passant par le creux 3.

Les conducteurs filaires 7 sont répartis dans plusieurs plans porteurs 9 parallèles ou sensiblement parallèles au premier plan de symétrie 8, dont les deux plans porteurs principaux 91, 92 symétriques par rapport au premier plan de symétrie 8 et situés à l'extérieur du creux 3, chaque plan porteur principal 91, 92 portant des conducteurs filaires 7 qui conduisent le courant électrique dans le premier sens 71 et des conducteurs filaires 7 qui conduisent le courant électrique dans le deuxième sens 72 opposé au premier sens.

Le procédé comprend un déplacement, par les moyens de déplacement, des plans porteurs de réglage 93, 94 parallèlement et/ou perpendiculairement au premier plan de symétrie 8 le long de X et/ou Z.

Les conducteurs filaires 7 et leur courant génèrent un champ magnétique dont la composante Bz(X) selon une direction Z reliant les deux plans porteurs principaux 91, 92 et variant en fonction de la coordonnée selon une direction X perpendiculaire à la direction Z et à l'axe longitudinal Y et tel que décrit précédemment selon le mode de réalisation considéré, et notamment:

- a une valeur nulle pour une position de champ nul

10 située dans le creux du conduit, de préférence située sensiblement au centre d'une coupe transversale (perpendiculairement à Y) du creux 3 du conduit 2, et a un champ inférieur 5 $\mu$T (de préférence 2 $\mu$T) sur un intervalle selon la direction X d'au moins 0,05 mm autour de la position de champ nul, pour une disposition des conducteurs 7 aboutissant à une forme de champ nul de forme sextupolaire ou octupolaire (permettant d'assurer la transparence de l'injection vis-à-vis du faisceau stocké), et

- a une valeur d'au moins une crête, de préférence d'au moins deux crêtes de part et d'autre de la position de champ nul 10, d'au moins 10mT, de préférence d'au moins 15mT, pour au moins une position 11, 12 à une distance A de la position 10 de champ nul le long de la direction ou l'axe X et pour une crête de courant électrique de 1 kA dans les conducteurs filaires, cette position de crête 11, 12 de champ magnétique étant située dans le creux 3 du conduit 2, et de préférence avec A supérieur ou égal à 3mm et/ou inférieur ou égal à 7mm (ou même inférieur ou égal à 5mm)

Bien sûr, l'invention n'est pas limitée aux exemples qui viennent d'être décrits et de nombreux aménagements peuvent être apportés à ces exemples sans sortir du cadre de l'inventior telle que définie dans les revendications annexées.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres.

## Revendications

1. Electro-aimant (1) multipolaire pour l'injection de particules, de préférence d'électrons ou positrons, comprenant :

    - un conduit (2) creux, agencé pour la conduite de particules à l'intérieur de son creux (3), ce creux s'étendant selon un axe longitudinal Y (5),
    - une pluralité de conducteurs filaires (7) placés parallèlement ou sensiblement parallèlement à l'axe longitudinal Y le long du conduit, électriquement reliés en série et agencés pour conduire du courant électrique
    le sens du courant (71, 72) électrique parcourant les conducteurs filaires n'étant pas identique pour tous les conducteurs filaires,
    l'électro-aimant comprenant autant de conducteurs filaires conduisant le courant électrique dans un premier sens (71) que de conducteurs filaires conduisant le courant électrique dans un deuxième sens (72) opposé au premier sens,
    les sens du courant électrique parcourant les conducteurs filaires étant symétriques par rapport à un premier plan de symétrie (8) parallèle ou sensiblement parallèle à l'axe longitudinal et passant par le creux, **caractérisé en ce que** les conducteurs filaires sont répartis dans plusieurs plans porteurs (9) parallèles ou sensiblement parallèles au premier plan de symétrie, dont deux plans porteurs principaux (91, 92) symétriques par rapport au premier plan de symétrie et situés à l'extérieur du creux chaque plan porteur principal portant des conducteurs filaires qui conduisent le courant électrique dans le premier sens et des conducteurs filaires qui conduisent le courant électrique dans le deuxième sens opposé au premier sens.

2. Électro-aimant selon la revendication 1, **caractérisé en ce que** chaque plan porteur principal (91, 92) porte au moins quatre conducteurs filaires, et porte de préférence 4, 5 ou 14 conducteurs filaires.

3. Électro-aimant selon la revendication 1 ou 2, **caractérisé en ce que** les deux plans porteurs principaux (91, 92) sont distants d'une distance entre eux supérieure ou égale à 7 mm.

4. Électro-aimant selon l'une quelconque des revendications précédentes, **caractérisé en ce que** chaque plan porteur principal (91, 92) comprend uniquement des conducteurs filaires se succédant les uns après les autres selon une alternance entre respectivement un ou deux conducteur(s) filaire(s) conduisant le courant électrique dans le premier sens (71) puis respectivement un ou deux conducteur(s) filaire(s) conduisant le courant électrique dans le deuxième sens (72) opposé au premier sens.

5. Électro-aimant selon l'une quelconque des revendications précédentes, **caractérisé en ce que** les plans porteurs comprennent en outre deux plans porteurs de réglage (93, 94), symétriques par rapport au premier plan de symétrie et situés à l'extérieur du creux (3) de sorte que les plans porteurs principaux (91, 92) sont situés entre les plans porteurs de réglage (93, 94).

6. Électro-aimant selon la revendication 5, **caractérisé en ce qu'**il comprend des moyens pour déplacer les plans porteurs de réglage (93, 94) parallèlement et/ou perpendiculairement au premier plan de symétrie (8).

7. Électro-aimant selon la revendication 5 ou 6, **caractérisé en ce que** chaque plan porteur de réglage (93, 94) porte au moins ou exactement 1, 2 ou 4 conducteurs filaires.

8. Électro-aimant selon l'une quelconque des revendications 5 à 7, **caractérisé en ce que** chaque plan porteur de réglage (93, 94) comprend des conducteurs filaires se succédant les uns après les autres selon une alternance entre respectivement un ou deux conducteur(s) filaire(s) conduisant le courant électrique dans le premier sens puis respectivement un ou deux conducteur(s) filaire(s) conduisant le courant électrique dans le deuxième sens opposé au premier sens.

9. Électro-aimant selon l'une quelconque des revendications 5 à 8, **caractérisé en ce que** le sens du courant électrique parcourant les conducteurs filaires (73) aux extrémités de la succession de conducteurs filaires portés par les plans porteurs principaux (91, 92) est opposé au sens du courant électrique parcourant les conducteurs filaires (74) aux extrémités de la succession de conducteurs filaires portés par les plans porteurs de réglage (93, 94).

10. Électro-aimant selon l'une quelconque des revendications précédentes, **caractérisé en ce que** les sens du courant électrique parcourant les conducteurs filaires (7) sont symétriques par rapport à un deuxième plan de symétrie (88) parallèle ou sensiblement parallèle à l'axe longitudinal Y et passant par le creux et perpendiculaire au premier plan de symétrie (8).

11. Électro-aimant selon l'une quelconque des revendications précédentes, **caractérisé en ce que** le creux (3) a

- selon une direction Z reliant les deux plans porteurs principaux, une dimension d'au moins 6 mm,
- selon une direction X perpendiculaire à la direction Z et à l'axe longitudinal Y, une dimension d'au moins 6 mm

12. Électro-aimant selon l'une quelconque des revendications précédentes, **caractérisé en ce que** les conducteurs filaires et leur courant sont agencés pour générer un champ magnétique dont la composante $Bz(X)$ selon une direction Z reliant les deux plans porteurs principaux et variant en fonction de la coordonnée selon une direction X perpendiculaire à la direction Z et à l'axe longitudinal Y :

- a une valeur nulle pour une position de champ nul (10) située dans le creux du conduit, de préférence située sensiblement au centre d'une coupe transversale du creux du conduit, et a un champ inférieur $5\mu T$, et
- a une valeur d'au moins une crête, de préférence d'au moins deux crêtes de part et d'autre de la position de champ nul, d'au moins 10mT, de préférence d'au moins 15mT, pour une position (11, 12) à une distance A de la position de champ nul le long de la direction X et pour une crête de courant électrique de 1 kA dans les conducteurs filaires, cette crête de champ magnétique étant située dans le creux du conduit, et de préférence avec A supérieur ou égal à 3mm et/ou inférieur ou égal à 7mm

13. Électro-aimant selon l'une quelconque des revendications précédentes, **caractérisé en ce qu'**il comprend des moyens pour générer le courant électrique, de préférence pulsé, parcourant les conducteurs filaires et supérieur à 500 Ampères et/ou inférieur à 10000 Ampères.

14. Électro-aimant selon l'une quelconque des revendications précédentes, **caractérisé en ce que** le nombre de conducteurs filaires placés parallèlement ou sensiblement parallèlement à l'axe longitudinal le long du conduit et reliés en série est supérieur ou égal à 12.

15. Électro-aimant selon l'une quelconque des revendications précédentes, **caractérisé en ce que** le nombre de conducteurs filaires placés parallèlement ou sensiblement parallèlement à l'axe longitudinal le long du conduit et reliés en série est inférieur ou égal à 32.

16. Électro-aimant selon l'une quelconque des revendications précédentes, **caractérisé en ce que** le nombre de conducteurs filaires placés parallèlement ou sensiblement parallèlement à l'axe longitudinal le long du conduit et reliés en série est égal à 12, 16 ou 32.

17. Électro-aimant selon l'une quelconque des revendications précédentes, **caractérisé en ce que**, à chacune des deux extrémités de l'électro-aimant le long de l'axe longitudinal Y, des conducteurs filaires voisins sont reliés par paire par une liaison en série, cette liaison en série comprenant une boucle (30) s'étendant dans un plan perpendiculaire au premier plan de symétrie, cette boucle fermée comprenant :

- Une première partie (31) de la boucle partant d'un premier conducteur filaire de la paire, perpendiculairement au premier plan de symétrie (8)
- Une troisième partie (33) de la boucle rejoignant un deuxième conducteur filaire de la paire, perpendiculairement au premier plan de symétrie (8)
- Une deuxième partie (32) de la boucle reliant la première partie de la boucle à la troisième partie de la boucle, parallèlement ou sensiblement parallèlement au premier plan de symétrie (8)

les deuxièmes parties de toutes ces boucles étant, pour une extrémité considérée des conducteurs filaires, parcourues par le courant électrique dans un même sens,

et **en ce que**, de chacun des deux côtés du premier plan de symétrie, l'électro-aimant comprend un conducteur auxiliaire (40) reliant électriquement en série un conducteur filaire à un autre conducteur filaire ou à une borne d'alimentation électrique, d'une première extrémité de l'électro-aimant le long de la direction longitudinale Y à une deuxième extrémité de l'électro-aimant le long de la direction longitudinale, ce conducteur auxiliaire comprenant, à chacune des deux extrémités de l'électro-aimant le long de la direction Y, les parties suivantes reliées dans cet ordre en série :

- Une première partie (41) reliée électriquement à un conducteur filaire ou à une des deux bornes d'alimentation électrique (45)
- Une deuxième partie (42) s'étendant parallèlement ou sensiblement parallèlement au premier plan de symétrie (8) et agencée pour être parcourue par un courant électrique dans un sens opposé aux deuxièmes parties de boucles situées à la même extrémité de l'électro-aimant le long de la direction longitudinale Y, de sorte que ces deuxièmes parties de boucles soient situées entre le premier plan de symétrie et la deuxième partie du conducteur auxiliaire,
- Optionnellement, une troisième partie (43) s'étendant parallèlement ou sensiblement parallèlement au premier plan de symétrie (8) et agencée pour être parcourue par un courant électrique dans un même sens que les deuxièmes parties de boucles situées à la même extrémité de l'électro-aimant le long de la direction longitudinale Y, de sorte que la deuxième partie du conducteur auxiliaire soit située entre le premier plan de symétrie et la troisième partie du conducteur auxiliaire,
- Une quatrième partie (44) reliant les deux extrémités (21, 22) de l'électro-aimant le long de la direction longitudinale Y.

18. Accélérateur de particules, de préférence d'électrons ou positrons, comprenant une source de rayonnement synchrotron, un anneau de stockage de particules chargées circulant dans cet anneau, et un électro-aimant selon l'une quelconque des revendications précédentes.

19. Procédé mis en oeuvre dans un électro-aimant (1) multipolaire pour l'injection de particules comprenant :

- Une étape de conduite de particules, de préférence d'électrons ou positrons, à l'intérieur du creux (3) d'un conduit (2) creux, ce creux s'étendant selon un axe longitudinal Y (5),
- Une étape de conduite d'un courant électrique dans une pluralité de conducteurs filaires (7) placés parallèlement ou sensiblement parallèlement à l'axe longitudinal Y le long du conduit, et électriquement reliés en série

le sens du courant (71, 72) électrique parcourant les conducteurs filaires n'étant pas identique pour tous les conducteurs filaires,

l'électro-aimant comprenant autant de conducteurs filaires conduisant le courant électrique dans un premier sens (71) que de conducteurs filaires conduisant le courant électrique dans un deuxième sens (72) opposé au premier sens, les sens du courant électrique parcourant les conducteurs filaires étant symétriques par rapport à un premier plan de symétrie (8) parallèle ou sensiblement parallèle à l'axe longitudinal et passant par le creux, **caractérisé en ce que** les conducteurs filaires sont répartis dans plusieurs plans porteurs (9) parallèles ou sensiblement parallèles au premier plan de symétrie, dont deux plans porteurs principaux (91, 92) symétriques par rapport au premier plan de symétrie et situés à l'extérieur du creux chaque plan porteur principal portant des conducteurs filaires qui conduisent le courant électrique dans le premier sens et des conducteurs filaires qui conduisent le courant électrique dans le deuxième sens opposé au premier sens.

**Patentansprüche**

1. Mehrpoliger Elektromagnet (1) zur Injektion von Teilchen, vorzugsweise von Elektronen oder Positronen, enthaltend:

   - einen hohlen Kanal (2), der zum Weiterleiten von Teilchen innerhalb seines Hohlraums (3) ausgebildet ist, wobei sich der Hohlraum entlang einer Längsachse Y (5) erstreckt,
   - eine Vielzahl von Drahtleitern (7), die parallel oder im Wesentlichen parallel zu der Längsachse Y entlang des Kanals angeordnet, elektrisch in Reihe geschaltet und zum Leiten von elektrischem Strom ausgebildet sind,
   wobei die Richtung des elektrischen Stroms (71, 72), der durch die Drahtleiter fließt, nicht für alle Drahtleiter gleich ist,
   wobei der Elektromagnet ebenso viele Drahtleiter umfasst, die den elektrischen Strom in einer ersten Richtung (71) leiten, wie Drahtleiter, die den elektrischen Strom in einer zweiten Richtung (72) leiten, die der ersten Richtung entgegengesetzt ist,
wobei die Richtungen des durch die Drahtleiter fließenden elektrischen Stroms symmetrisch in Bezug auf eine erste Symmetrieebene (8) verlaufen, die parallel oder im Wesentlichen parallel zur Längsachse ist und durch den Hohlraum verläuft,
**dadurch gekennzeichnet, dass** die Drahtleiter auf mehrere Trägerebenen (9) verteilt sind, die parallel oder im Wesentlichen parallel zur ersten Symmetrieebene verlaufen, von denen zwei Hauptträgerebenen (91, 92) symmetrisch in Bezug auf die erste Symmetrieebene verlaufen und außerhalb des Hohlraums liegen, wobei jede Hauptträgerebene Drahtleiter, die den elektrischen Strom in der ersten Richtung leiten, und Drahtleiter, die den elektrischen Strom in der zweiten Richtung entgegengesetzt zur ersten Richtung leiten, trägt.

2. Elektromagnet nach Anspruch 1, **dadurch gekennzeichnet, dass** jede Hauptträgerebene (91, 92) mindestens vier Drahtleiter trägt und vorzugsweise 4, 5 oder 14 Drahtleiter trägt.

3. Elektromagnet nach Anspruch 1 oder 2, **dadurch gekennzeichnet, dass** die beiden Hauptträgerebenen (91, 92) in einem Abstand von größer oder gleich 7 mm voneinander beabstandet sind.

4. Elektromagnet nach einem der vorhergehenden Ansprüche, **dadurch gekennzeichnet, dass** jede Hauptträgerebene (91, 92) nur Drahtleiter umfasst, die gemäß einer Wechselfolge zwischen jeweils einem oder zwei Drahtleitern, die den elektrischen Strom in der ersten Richtung (71) leiten, und dann jeweils einem oder zwei Drahtleitern, die den elektrischen Strom in der zweiten Richtung (72) entgegengesetzt zur ersten Richtung leiten, aufeinander folgen.

5. Elektromagnet nach einem der vorhergehenden Ansprüche, **dadurch gekennzeichnet, dass** die Trägerebenen ferner zwei Stellträgerebenen (93, 94) umfassen, die symmetrisch zur ersten Symmetrieebene verlaufen und außerhalb des Hohlraums (3) liegen, so dass die Hauptträgerebenen (91, 92) zwischen den Stellträgerebenen (93, 94) liegen.

6. Elektromagnet nach Anspruch 5, **dadurch gekennzeichnet, dass** er Mittel zum Bewegen der Stellträgerebenen (93, 94) parallel und/oder senkrecht zur ersten Symmetrieebene (8) umfasst.

7. Elektromagnet nach Anspruch 5 oder 6, **dadurch gekennzeichnet, dass** jede Stellträgerebene (93, 94) zumindest oder genau 1, 2 oder 4 Drahtleiter trägt.

8. Elektromagnet nach einem der Ansprüche 5 bis 7, **dadurch gekennzeichnet, dass** jede Stellträgerebene (93, 94) Drahtleiter umfasst, die gemäß einer Wechselfolge zwischen jeweils einem oder zwei Drahtleitern, die den elektrischen Strom in der ersten Richtung leiten, und dann jeweils einem oder zwei Drahtleitern, die den elektrischen Strom in der zweiten Richtung entgegengesetzt zur ersten Richtung leiten, aufeinander folgen.

9. Elektromagnet nach einem der Ansprüche 5 bis 8, **dadurch gekennzeichnet, dass** die Richtung des elektrischen Stroms, der durch die Drahtleiter (73) an den Enden der Aufeinanderfolge von Drahtleitern fließt, die von den Hauptträgerebenen (91, 92) getragen werden, der Richtung des elektrischen Stroms entgegengesetzt ist, der durch die Drahtleiter (74) an den Enden der Aufeinanderfolge von Drahtleitern fließt, die von den Stellträgerebenen (93, 94) getragen werden.

10. Elektromagnet nach einem der vorhergehenden Ansprüche, **dadurch gekennzeichnet, dass** die Richtungen des durch die Drahtleiter (7) fließenden elektrischen Stroms symmetrisch in Bezug auf eine zweite Symmetrieebene (88) verlaufen, die parallel oder im Wesentlichen parallel zur Längsachse Y ist und durch den Hohlraum verläuft und senkrecht zur ersten Symmetrieebene (8) ist.

11. Elektromagnet nach einem der vorhergehenden Ansprüche, **dadurch gekennzeichnet, dass** der Hohlraum (3)

    - in einer Richtung Z, die die beiden Hauptträgerebenen verbindet, eine Abmessung von mindestens 6 mm hat,
    - in einer Richtung X, die senkrecht zur Richtung Z und zur Längsachse Y verläuft, eine Abmessung von mindestens 6 mm hat.

12. Elektromagnet nach einem der vorhergehenden Ansprüche, **dadurch gekennzeichnet, dass** die Drahtleiter und deren Strom dazu ausgebildet sind, ein Magnetfeld zu erzeugen, dessen Komponente $Bz(X)$ in einer Richtung Z, die die beiden Hauptträgerebenen verbindet und sich koordinatenabhängig in einer Richtung X senkrecht zur Richtung Z und zur Längsachse Y ändert:

    - wobei ein Wert von Null bei einer Nullfeldposition (10) vorliegt, die sich in dem Kanalhohlraum befindet, vorzugsweise im Wesentlichen im Zentrum eines Querschnitts des Kanalhohlraums, und ein Feld von weniger als $5\mu T$ hat, und
    - wobei ein Wert von mindestens einer Spitze, vorzugsweise mindestens zwei Spitzen beiderseits der Nullfeldposition, von mindestens 10mT, vorzugsweise mindestens 15mT, bei einer Position (11, 12) in einem Abstand A von der Nullfeldposition entlang der Richtung X und bei einer elektrischen Stromspitze von 1 kA in den Drahtleitern vorliegt, wobei diese Magnetfeldspitze im Kanalhohlraum liegt, wobei vorzugsweise A größer oder gleich 3 mm und/oder kleiner oder gleich 7 mm ist.

13. Elektromagnet nach einem der vorhergehenden Ansprüche, **dadurch gekennzeichnet, dass** er Mittel zur Erzeugung des elektrischen, vorzugsweise pulsweisen Stroms umfasst, der durch die Drahtleiter fließt und größer als 500 Ampere und/oder kleiner als 10000 Ampere ist.

14. Elektromagnet nach einem der vorhergehenden Ansprüche, **dadurch gekennzeichnet, dass** die Anzahl der Drahtleiter, die parallel oder im Wesentlichen parallel zur Längsachse entlang des Kanals angeordnet und in Reihe geschaltet sind, größer oder gleich 12 ist.

15. 15. Elektromagnet nach einem der vorhergehenden Ansprüche, **dadurch gekennzeichnet, dass** die Anzahl der Drahtleiter, die parallel oder im Wesentlichen parallel zur Längsachse entlang des Kanals angeordnet und in Reihe geschaltet sind, kleiner oder gleich 32 ist.

16. Elektromagnet nach einem der vorhergehenden Ansprüche, **dadurch gekennzeichnet, dass** die Anzahl der Drahtleiter, die parallel oder im Wesentlichen parallel zur Längsachse entlang des Kanals angeordnet und in Reihe geschaltet sind, gleich 12, 16 oder 32 ist.

17. Elektromagnet nach einem der vorhergehenden Ansprüche, **dadurch gekennzeichnet, dass** an jedem der beiden Enden des Elektromagneten entlang der Längsachse Y benachbarte Drahtleiter paarweise durch eine Reihenschaltung verbunden sind, wobei die Reihenschaltung eine Schleife (30) umfasst, die sich in einer Ebene senkrecht zur ersten Symmetrieebene erstreckt, wobei die geschlossene Schleife das Folgende umfasst:

    - einen ersten Schleifenabschnitt (31), der von einem ersten Drahtleiter des Paares senkrecht zur ersten Symmetrieebene (8) ausgeht,
    - einen dritten Schleifenabschnitt (33), der an einen zweiten Drahtleiter des Paares senkrecht zur ersten Symmetrieebene (8) anschließt,
    - einen zweiten Schleifenabschnitt (32), der den ersten Schleifenabschnitt mit dem dritten Schleifenabschnitt parallel oder im Wesentlichen parallel zur ersten Symmetrieebene (8) verbindet,

wobei die zweiten Abschnitte aller dieser Schleifen bei einem jeweiligen Ende der Drahtleiter vom elektrischen Strom in einer gleichen Richtung durchflossen werden,

und wobei auf jeder der beiden Seiten der ersten Symmetrieebene der Elektromagnet einen Hilfsleiter (40) umfasst, der einen Drahtleiter elektrisch in Reihe mit einem weiteren Drahtleiter oder einem Stromversorgungsanschluss von einem ersten Ende des Elektromagneten entlang der Längsrichtung Y zu einem zweiten Ende des Elektromagneten entlang der Längsrichtung verbindet, wobei der Hilfsleiter an jedem der beiden Enden des Elektromagneten entlang der Richtung Y die folgenden Abschnitte umfasst, die in dieser Reihenfolge in Reihe geschaltet sind:

- einen ersten Abschnitt (41), der elektrisch mit einem Drahtleiter oder mit einem der beiden Stromversorgungsanschlüsse (45) verbunden ist,
- einen zweiten Abschnitt (42), der sich parallel oder im Wesentlichen parallel zur ersten Symmetrieebene (8) erstreckt und dazu ausgebildet ist, von einem elektrischen Strom in einer Richtung durchflossen zu werden, die den zweiten Schleifenabschnitten entgegengesetzt ist, die sich am selben Ende des Elektromagneten entlang der Längsrichtung Y befinden, so dass diese zweiten Schleifenabschnitte zwischen der ersten Symmetrieebene und dem zweiten Abschnitt des Hilfsleiters liegen,
- optional einen dritten Abschnitt (43), der sich parallel oder im Wesentlichen parallel zur ersten Symmetrieebene (8) erstreckt und dazu ausgebildet ist, von einem elektrischen Strom in der gleichen Richtung durchflossen zu werden wie die zweiten Schleifenabschnitte, die sich am gleichen Ende des Elektromagneten entlang der Längsrichtung Y befinden, so dass der zweite Abschnitt des Hilfsleiters zwischen der ersten Symmetrieebene und dem dritten Abschnitt des Hilfsleiters liegt,
- einen vierten Abschnitt (44), der die beiden Enden (21, 22) des Elektromagneten entlang der Längsrichtung Y verbindet.

18. Teilchenbeschleuniger, vorzugsweise für Elektronen oder Positronen, mit einer Synchrotronstrahlungsquelle, einem Ring zur Speicherung von geladenen Teilchen, die in diesem Ring zirkulieren, und einem Elektromagneten nach einem der vorhergehenden Ansprüche.

19. Verfahren, durchgeführt in einem mehrpoligen Elektromagneten (1) zur Injektion von Teilchen, das das Folgende umfasst:

- einen Schritt des Weiterleitens von Teilchen, vorzugsweise Elektronen oder Positronen, innerhalb des Hohlraums (3) eines hohl ausgeführten Kanals (2), wobei sich dieser Hohlraum entlang einer Längsachse Y (5) erstreckt,
- einen Schritt des Leitens eines elektrischen Stroms durch eine Vielzahl von Drahtleitern (7), die parallel oder im Wesentlichen parallel zur Längsachse Y entlang des Kanals angeordnet und elektrisch in Reihe geschaltet sind,

wobei die Richtung des durch die Drahtleiter fließenden elektrischen Stroms (71, 72) nicht für alle Drahtleiter gleich ist,

wobei der Elektromagnet ebenso viele Drahtleiter umfasst, die den elektrischen Strom in einer ersten Richtung (71) leiten, wie Drahtleiter, die den elektrischen Strom in einer zweiten Richtung (72) leiten, die der ersten Richtung entgegengesetzt ist,

wobei die Richtungen des durch die Drahtleiter fließenden elektrischen Stroms symmetrisch in Bezug auf eine erste Symmetrieebene (8) verlaufen, die parallel oder im Wesentlichen parallel zur Längsachse ist und durch den Hohlraum verläuft,

**dadurch gekennzeichnet, dass** die Drahtleiter auf mehrere Trägerebenen (9) verteilt sind, die parallel oder im Wesentlichen parallel zur ersten Symmetrieebene verlaufen, von denen zwei Hauptträgerebenen (91, 92) symmetrisch in Bezug auf die erste Symmetrieebene verlaufen und außerhalb des Hohlraums liegen, wobei jede Hauptträgerebene Drahtleiter, die den elektrischen Strom in der ersten Richtung leiten, und Drahtleiter, die den elektrischen Strom in der zweiten Richtung entgegengesetzt zur ersten Richtung leiten, trägt.

**Claims**

1. Multipole electromagnet (1) for particle injection, preferably of electrons or positrons, comprising:

- a hollow duct (2), arranged to transport particles inside its hollow (3), this hollow extending along a longitudinal axis Y (5),
- a plurality of wire conductors (7) placed parallel or substantially parallel to the longitudinal axis Y along the duct, connected electrically in series and arranged to conduct electric current the direction of the electric current (71, 72) flowing through the wire conductors not being identical for all of the wire conductors,

the electromagnet comprising as many wire conductors conducting electric current in a first direction (71) as wire conductors conducting electric current in a second direction (72) opposite to the first direction,

the directions of the electric current flowing through the wire conductors being symmetric relative to a first plane of symmetry (8) parallel or substantially parallel to the longitudinal axis and passing through the hollow, **characterized in that** the wire conductors are distributed in several carrier planes (9) parallel or substantially parallel to the first plane of symmetry, including two principal carrier planes (91, 92) symmetric relative to the first plane of symmetry and located outside the hollow, each principal carrier plane carrying wire conductors that conduct electric current in the first direction and wire conductors that conduct electric current in the second direction opposite to the first direction.

2. Electromagnet according to claim 1, **characterized in that** each principal carrier plane (91, 92) carries at least four wire conductors, and preferably carries 4, 5 or 14 wire conductors.

3. Electromagnet according to claim 1 or 2, **characterized in that** the two principal carrier planes (91, 92) are a distance apart greater than or equal to 7 mm.

4. Electromagnet according to any one of the preceding claims, **characterized in that** each principal carrier plane (91, 92) comprises only wire conductors following one another according to an alternation between respectively one or two wire conductor(s) conducting electric current in the first direction (71) then respectively one or two wire conductor(s) conducting electric current in the second direction (72) opposite to the first direction.

5. Electromagnet according to any one of the preceding claims, **characterized in that** the carrier planes further comprise two control carrier planes (93, 94), symmetric relative to the first plane of symmetry and located outside the hollow (3) so that the principal carrier planes (91, 92) are located between the control carrier planes (93, 94).

6. Electromagnet according to claim 5, **characterized in that** it comprises means for displacing the control carrier planes (93, 94) in parallel and/or perpendicularly to the first plane of symmetry (8).

7. Electromagnet according to claim 5 or 6, **characterized in that** each control carrier plane (93, 94) carries at least or exactly 1, 2 or 4 wire conductors.

8. Electromagnet according to any one of claims 5 to 7, **characterized in that** each control carrier plane (93, 94) comprises wire conductors following one another according to an alternation between respectively one or two wire conductor(s) conducting electric current in the first direction then respectively one or two wire conductor(s) conducting electric current in the second direction opposite to the first direction.

9. Electromagnet according to any one of claims 5 to 8, **characterized in that** the direction of the electric current flowing through the wire conductors (73) at the ends of the succession of wire conductors carried by the principal carrier planes (91, 92) is opposite to the direction of the electric current flowing through the wire conductors (74) at the ends of the succession of wire conductors carried by the control carrier planes (93, 94).

10. Electromagnet according to any one of the preceding claims, **characterized in that** the directions of the electric current flowing through the wire conductors (7) are symmetric relative to a second plane of symmetry (88) parallel or substantially parallel to the longitudinal axis Y and passing through the hollow, and perpendicular to the first plane of symmetry (8).

11. Electromagnet according to any one of the preceding claims, **characterized in that** the hollow (3) has

- in a direction Z joining the two principal carrier planes, a dimension of at least 6 mm,
- in a direction X perpendicular to the direction Z and to the longitudinal axis Y, a dimension of at least 6 mm

12. Electromagnet according to any one of the preceding claims, **characterized in that** the wire conductors and their current are arranged to generate a magnetic field the component $Bz(X)$ of which in a direction Z joining the two principal carrier planes and varying as a function of the coordinate in a direction X perpendicular to the direction Z and to the longitudinal axis Y:

- has a zero value for a zero field position (10) located in the hollow of the duct, preferably located substantially at the centre of a cross-section of the hollow of the duct, and has a field less than $5\mu T$, and
- has a value with at least one peak, preferably with at least two peaks on either side of the zero field position, of at least 10 mT, preferably of at least 15 mT, for a position (11, 12) at a distance A from the zero field position along direction X and for a peak of electric current of 1 kA in the wire conductors, this magnetic field peak being located in the hollow of the duct, and preferably with A greater than or equal to 3 mm and/or less than or equal to 7 mm.

13. Electromagnet according to any one of the preceding claims, **characterized in that** it comprises means for generating electric current, preferably pulsed, flowing through the wire conductors and greater than 500 amperes and/or less than 10000 amperes.

14. Electromagnet according to any one of the preceding claims, **characterized in that** the number of wire conductors placed parallel or substantially parallel to the longitudinal axis along the duct and connected in series is greater than or equal to 12.

15. Electromagnet according to any one of the preceding claims, **characterized in that** the number of wire conductors placed parallel or substantially parallel to the longitudinal axis along the duct and connected in series is less than or equal to 32.

16. Electromagnet according to any one of the preceding claims, **characterized in that** the number of wire conductors placed parallel or substantially parallel to the longitudinal axis along the duct and connected in series is equal to 12, 16 or 32.

17. Electromagnet according to any one of the preceding claims, **characterized in that**, at each of the two ends of the electromagnet along the longitudinal axis Y, adjacent wire conductors are connected in pairs by a series connection, this series connection comprising a loop (30) extending in a plane perpendicular to the first plane of symmetry, this closed loop comprising:

- A first part (31) of the loop starting from a first wire conductor of the pair, perpendicularly to the first plane of symmetry (8)
- A third part (33) of the loop connecting a second wire conductor of the pair, perpendicularly to the first plane of symmetry (8)
- A second part (32) of the loop connecting the first part of the loop to the third part of the loop, parallel or substantially parallel to the first plane of symmetry (8)

the second parts of all these loops being, for an end under consideration of the wire conductors, traversed by the electric current in one and the same direction and **in that**, on each of the two sides of the first plane of symmetry, the electromagnet comprises an auxiliary conductor (40) connecting a wire conductor electrically in series to another wire conductor or to an electrical supply terminal, from a first end of the electromagnet along the longitudinal direction Y to a second end of the electromagnet along the longitudinal direction, this auxiliary conductor comprising, at each of the two ends of the electromagnet along the direction Y, the following parts connected in series, in this order:

- A first part (41) connected electrically to a wire conductor or to one of the two electrical supply terminals (45)
- A second part (42) extending parallel or substantially parallel to the first plane of symmetry (8) and arranged to be traversed by an electric current in an opposite direction to the second parts of loops located at the same end of the electromagnet along the longitudinal direction Y, so that these second parts of loops are located between the first plane of symmetry and the second part of the auxiliary conductor,
- Optionally, a third part (43) extending parallel or substantially parallel to the first plane of symmetry (8) and arranged to be traversed by an electric current in one and the same direction as the second parts of loops located at the same end of the electromagnet along the longitudinal direction Y, so that the second part of the auxiliary conductor is located between the first plane of symmetry and the third part of the auxiliary conductor,
- A fourth part (44) joining the two ends (21, 22) of the electromagnet along the longitudinal direction Y.

18. Particle accelerator, preferably of electrons or positrons, comprising a synchrotron radiation source, a storage ring of charged particles circulating in this ring, and an electromagnet according to any one of the preceding claims.

19. Method used in a multipole electromagnet (1) for particle injection comprising:

- A step of transporting particles, preferably electrons or positrons, inside the hollow (3) of a hollow duct (2), this hollow extending along a longitudinal axis Y (5),
- A step of conducting an electric current in a plurality of wire conductors (7) placed parallel or substantially parallel to the longitudinal axis Y along the duct, and connected electrically in series
the direction of the electric current (71, 72) flowing through the wire conductors not being identical for all of the wire conductors,
the electromagnet comprising as many wire conductors conducting electric current in a first direction (71) as wire conductors conducting electric current in a second direction (72) opposite to the first direction,
the directions of the electric current flowing through the wire conductors being symmetric relative to a first plane of symmetry (8) parallel

**EP 4 179 553 B1**

or substantially parallel to the longitudinal axis and passing through the hollow, **characterized in that** the wire conductors are distributed in several carrier planes (9) parallel or substantially parallel to the first plane of symmetry, including two principal carrier planes (91, 92) symmetric relative to the first plane of symmetry and located outside the hollow of each principal carrier plane carrying wire conductors that conduct electric current in the first direction and wire conductors that conduct electric current in the second direction opposite to the first direction.

[Fig. 1]

Art Antérieur

[Fig. 2]

Art Antérieur

[Fig. 3]

Art Antérieur

[Fig. 4]

Art Antérieur

[Fig. 5]

[Fig. 6]

[Fig. 7]

[Fig. 8]

[Fig. 9]

[Fig. 10]

Bz(X)

FIG. 10a

Bx(X)

FIG. 10b

[Fig. 11]

[Fig. 12]

[Fig. 13]

FIG. 13a

FIG. 13b

[Fig. 14]

FIG. 14b

FIG. 14a

[Fig. 15]

[Fig. 16]

**Champ magnétique Bz(s) pour différentes positions "x"**
**Connections interspires non optimisées**
**Topologie MIK D**

[Fig. 17]

**Champ magnétique Bz(s) pour différentes positions "x"**
**Connections interspires optimisées**
**Topologie MIK D**